# EUROPEAN PATENT APPLICATION

(11) **EP 4 243 554 A1**
(43) Date of publication of application: **13.09.2023**
(21) Application number: 20965417.7
(22) Date of filing: 15.12.2020
(51) Int. Cl.: H04W 76/12, H04W 36/12

(54) **COMMUNICATION METHOD AND COMMUNICATION APPARATUS**

(71) Applicant: Huawei Technologies Co., Ltd., Shenzhen, Guangdong 518129 (CN)
(72) Inventor: ZHOU, Yan, Shenzhen, Guangdong 518129 (CN); ZHOU, Han, Shenzhen, Guangdong 518129 (CN)
(74) Representative: Gill Jennings & Every LLP
(86) International application number: PCT/CN2020/136629
(87) International publication number: WO 2022/126399

(57) **Abstract**

This application discloses a communication method and a communication apparatus. The communication method includes: A user plane function network element receives, from an application server, a packet that carries addressing information, determines a terminal device 20 based on the addressing information, and sends, to the terminal device 20, the packet that carries an extended address. The addressing information includes a basic address associated with a terminal device 10 and the extended address of the terminal device 10, the terminal device 20 is connected to one or more terminal devices, the one or more terminal devices include the terminal device 10, the one or more terminal devices are associated with a same basic address, and the one or more terminal devices have different extended addresses. Addressing is performed based on the extended address of the terminal device 10, and compared with a conventional technology in which addressing is performed based on a basic address, in this solution, a plurality of terminal devices 10 only need to be associated with a same basic address. Therefore, a problem of limited basic address allocation can be avoided.

## Description

### TECHNICAL FIELD

This application relates to the field of addressing technologies, and in particular, to a communication method and a communication apparatus.

### BACKGROUND

Usually, devices communicate with each other according to interface protocols between the devices. If the devices need to communicate with each other across a wide area, an addressing manner is used. To be specific, the manner is to search for a valid address of a destination device, and then communicate with the destination device based on the valid address. Currently, a global internet protocol (internet protocol, IP) address or media access control (media access control, MAC) address is used. Therefore, an IP address or a MAC address needs to be allocated to each device in a globally unified manner. However, application for the global IP address or MAC address is uncontrollable. For example, currently, for IP address or MAC address allocation, address space needs to be applied for in the United States, which has a disadvantage of being regulated. In other words, currently, an allocation limitation exists in the application for the global IP address or MAC address, and a requirement of communication between more devices cannot be met.

### SUMMARY

This application provides a communication method and a communication apparatus, to implement addressing based on an extended address and a basic address that are allocated to a device, thus avoiding a limitation on basic address allocation.

According to a first aspect, a communication method is provided. The method may be performed by a first communication apparatus. The first communication apparatus may be a communication device or a communication apparatus, for example, a chip system, that can support the communication device in implementing a function required in the method. The following uses an example in which the communication device is a user plane function network element for description.

The method includes: The user plane function network element receives, from an application server, a packet that carries addressing information, determines a terminal device 20 based on the addressing information, and sends, to the terminal device 20, the packet that carries an extended address. The addressing information includes a basic address associated with a terminal device 10 and the extended address of the terminal device 10, the terminal device 20 is connected to one or more terminal devices, the one or more terminal devices include the terminal device 10, the one or more terminal devices are associated with a same basic address, and the one or more terminal devices have different extended addresses.

It should be understood that a plurality of terminal devices 10 connected to the terminal device 20 are associated with a same basic address and have different extended addresses. In this case, if a terminal device 10 (for example, referred to as a first terminal device 10) needs to be accessed, the plurality of terminal devices 10 connected to the terminal device 20 may be determined based on the basic address, and then the first terminal device 10 is found from the plurality of terminal devices 10 based on an extended address of the first terminal device 10. Compared with a conventional technology in which a terminal device 10 is found based on a basic address, in the solution provided in this embodiment of this application, the plurality of terminal devices 10 only need to be associated with the same basic address, so that a limitation on basic address allocation can be avoided.

In this application, there are a plurality of manners in which the user plane function network element determines the terminal device 20 based on the addressing information. A specific manner to be used is not limited in this embodiment of this application.

For example, in a first manner of determining the terminal device 20, the basic address is a multicast address of a local area network, the local area network includes the terminal device 20 and the one or more terminal devices, and that the user plane function network element determines the terminal device 20 based on the addressing information includes: The user plane function network element determines the terminal device 20 based on the addressing information and a first correspondence, where the first correspondence is a correspondence between the basic address associated with the terminal device 10, the extended address of the terminal device 10, and a session of the terminal device 20 accessed by the terminal device 10. In this manner, the application server accesses the terminal device 10, and matches, via the user plane function network element, the session of the terminal device 20 accessed by the terminal device 10. In other words, the application server does not need to perceive an association between the terminal device 20 and the terminal device 10, to be specific, does not need to determine an association relationship between the extended address of the terminal device 10 and a basic address of the terminal device 20, thus simplifying complexity.

In a possible implementation, the user plane function network element may further establish (update) the first correspondence. There are a plurality of specific implementations of establishing the first correspondence. This is not limited in this embodiment of this application, and the implementations are flexible.

For example, in a first implementation, the method further includes: The user plane function network element receives a message 10 from the application server, broadcasts (or multicasts) a message 20 in the local area network, then receives the extended address of the terminal device 10 from the terminal device 10 by using the session of the terminal device 20, and establishes the first correspondence based on the session of the terminal device 20 and the extended address of the terminal device 10, where the message 10 is used to discover the terminal device 10, the message 10 includes the multicast address and identification information of the terminal device 10, and the message 20 includes the identification information of the terminal device 10. In this manner, the application server discovers at least one terminal device 10 in the local area network in a broadcast or multicast manner, in other words, indicates the at least one terminal device 10 to report an extended address of the at least one terminal device 10. Each terminal device 10 reports an extended address of the terminal device 10 to the user plane function network element by using the session of the terminal device 20, and then the user plane function network element reports the extended address to the application server. Therefore, the user plane function network element may learn of the extended address of each terminal device 10, and may further establish the first correspondence.

For example, in a second implementation, the method further includes: The user plane function network element receives, from the application server, the packet that carries the multicast address and the extended address of the terminal device 10; if the user plane function network element determines that there is no forwarding rule that matches the multicast address and the extended address of the terminal device 10, the user plane function network element broadcasts, in the local area network, the packet that carries the extended address of the terminal device 10; and then the user plane function network element receives a response 10 from the terminal device 10 by using the session of the terminal device 20, and establishes the first correspondence based on the session of the terminal device 20. In this manner, the application server discovers the terminal device 10 in the local area network in a unicast manner, in other words, indicates the terminal device 10 to report the extended address of the terminal device 10. Similarly, the terminal device 10 reports the extended address of the terminal device 10 to the user plane function network element by using the session of the terminal device 20, and then the user plane function network element reports the extended address to the application server. Therefore, the user plane function network element may learn of the extended address of the terminal device 10, and may further establish the first correspondence.

For example, in a second manner of determining the terminal device 20, the basic address associated with the terminal device 10 is a unicast address of the terminal device 20, and that the user plane function network element determines the terminal device 20 based on the addressing information includes: The user plane function network element determines the terminal device 20 based on a unicast address of the terminal device 10. In this manner, to access a terminal device 10, the application server may select a terminal device 20 accessed by the terminal device 10, and indicate the user plane function network element to forward data to the terminal device 10 via the terminal device 20. The user plane function network element may conveniently select a session of the terminal device 20 based on the unicast address of the terminal device 20 indicated by the application server, to forward the data from the application server to the terminal device 10 by using the session. Therefore, in this process, the user plane function network element does not need to perceive an association relationship between the extended address of the terminal device 10 and the session of the terminal device 20, and naturally does not need to perceive some interaction messages for establishing the association relationship. In this way, security of an industrial network is improved.

It should be understood that in the second manner of determining the terminal device 20, the application server needs to know an association relationship between the extended address of the terminal device 10 and/or identification information of the terminal device 10 and a basic address of the terminal device 20. In a possible implementation, the application server may establish (update) the association relationship. To be specific, the method provided in this application may further include: The user plane function network element receives a message 30 from the application server, and broadcasts a message 40 in a local area network, where the message 30 is used to discover the terminal device 10, the message 30 includes a multicast address of the local area network and identification information of the terminal device 10, the message 40 includes the identification information of the terminal device 10, and the terminal device 20 and the one or more terminal devices are located in the local area network. Then, the user plane function network element receives the extended address of the terminal device 10 from the terminal device 10 by using a session of the terminal device 20, and sends the extended address of the terminal device 10 and/or the identification information of the terminal device 10 and a basic address of the terminal device 20 to the application server. In this solution, the user plane function network element may send the extended address of the terminal device 10 and/or the identification information of the terminal device 10 and the basic address of the terminal device 20 to the application server, and the application server establishes an association relationship between the extended address of the terminal device 10 and the basic address of the terminal device 20, so that the application server can directly indicate, to the user plane function network element based on the association relationship, that the terminal device 10 accesses the terminal device 20.

In a possible implementation, the basic address includes a MAC address or an IP address. In the communication method provided in this application, the extended address may be obtained by extending the MAC address or the IP address at a data link layer. For example, the extended address is carried in an extension field of the MAC address or the IP address. The extended address is implemented at the data link layer, and may be replaced with a private address for addressing, thereby reducing a packet length.

According to a second aspect, another communication method is provided. The method may be performed by a second communication apparatus. The second communication apparatus may be a communication device or a communication apparatus, for example, a chip system, that can support the communication device in implementing a function required in the method. The following uses an example in which the communication device is a terminal device for description.

The method includes: A terminal device 20 receives, from a user plane function network element, a packet that carries an extended address of a terminal device 10, and sends the packet to the terminal device 10, where the terminal device 20 is connected to one or more terminal devices, the one or more terminal devices include the terminal device 10, the one or more terminal devices are associated with a same basic address, and the one or more terminal devices have different extended addresses. In this solution, one or more terminal devices 10 that access the terminal device 20 have a same basic address and different extended addresses, so that the terminal device 20 can address the one or more terminal devices 10 based on the extended addresses. Compared with a conventional technology in which addressing is performed based on a basic address of a terminal device 10 and different basic addresses need to be allocated to different terminal devices 10, in this solution, a same basic address may be allocated to a plurality of terminal devices 10, so that a limitation on basic address allocation can be avoided.

In a possible implementation, that the terminal device 20 sends the packet to the terminal device 10 includes: The terminal device 20 determines a first port of the terminal device 20 based on the extended address of the terminal device 10 and a second correspondence, and sends the packet to the terminal device 10 through the first port, where the second correspondence is a correspondence between an interface of the terminal device 20 and the extended address of the terminal device 10. It should be understood that a plurality of terminal devices 10 access the same terminal device 20, and the terminal device 20 addresses the terminal device 10 based on the extended address, and needs to determine a port connected to the terminal device. Therefore, the terminal device 20 needs to establish the second correspondence.

In a possible implementation, the method further includes: The terminal device 20 broadcasts a message 10, receives a response 10 from the terminal device 10 through the interface of the terminal device 20, and establishes the second correspondence based on the response 10, where the message 10 is used to discover the terminal device 10, and the message 10 includes identification information of the terminal device 10.

In a possible implementation, the method further includes: The terminal device 20 receives a message 20 from a control plane function network element, where the message 20 includes a multicast address of a local area network, and the terminal device 20 and the one or more terminal devices are located in the local area network. In this solution, the control plane function network element may configure the multicast address of the local area network, to discover the terminal device 10 located in the local area network. It should be understood that the multicast address is a basic address of the terminal device 20 accessed by the terminal device 10 in the local area network.

In a possible implementation, the method further includes: The terminal device 20 receives a message 50 from the control plane function network element, where the message 50 includes extended address information of the terminal device 10, and the extended address information indicates a type and/or a format of the extended address of the terminal device 10. In this solution, the control plane function network element may further configure the extended address for the terminal device 10, to implement dynamic allocation, update, and the like of the terminal device 10.

According to a third aspect, a communication method is provided. The method may be performed by a third communication apparatus. The third communication apparatus may be a communication device or a communication apparatus, for example, a chip system, that can support the communication device in implementing a function required in the method. The following uses an example in which the communication device is an application server for description. The method includes: The application server generates a packet that carries addressing information, and sends the packet to a user plane function network element, where the addressing information includes a basic address associated with a terminal device 10 and an extended address of the terminal device 10, a terminal device 20 is connected to one or more terminal devices, the one or more terminal devices include the terminal device 10, the one or more terminal devices are associated with a same basic address, and the one or more terminal devices have different extended addresses.

In a possible implementation, the method further includes: The application server configures, through a network capability exposure interface, a multicast address of a local area network in which the terminal device 20 is located, where the basic address associated with the terminal device 10 is the multicast address.

In a possible implementation, the method further includes: The application server sends a message 10 to the user plane function network element, and receives a message 20 from the user plane function network element, where the message 10 is used to discover the terminal device 10, the message 10 includes the multicast address and identification information of the terminal device 10, and the message 20 includes the extended address or the identification information of the terminal device 10 and a basic address of the terminal device 20 accessed by the terminal device 10; and then, the application server establishes a third correspondence between the extended address of the terminal device 10 and/or the identification information of the terminal device 10 and the basic address of the terminal device 20, wherein the terminal device 20 is accessed by the terminal device 10.

In a possible implementation, the basic address associated with the terminal device 10 is a unicast address of the terminal device 20.

In a possible implementation, the basic address includes a MAC address or an IP address.

For technical effects brought by the third aspect or the possible implementations of the third aspect, refer to the descriptions of the technical effects of the first aspect, the second aspect, or the possible implementations of the first aspect or the second aspect. Details are not described herein again.

According to a fourth aspect, a communication method is provided. The method may be performed by a fourth communication apparatus. The fourth communication apparatus may be a communication device or a communication apparatus, for example, a chip system, that can support the communication device in implementing a function required in the method. The following uses an example in which the communication device is a control plane function network element for description.

The method includes: The control plane function network element receives a message 10 from an application server, and sends a message 20 to a terminal device 20 or a user plane function network element, where the message 10 is used to configure information about a basic address associated with a terminal device 10 and information about an extended address associated with the terminal device 10, the terminal device 20 is connected to one or more terminal devices, the one or more terminal devices include the terminal device 10, the one or more terminal devices are associated with a same basic address, and the one or more terminal devices have different extended addresses. The message 20 includes the information about the extended address of the terminal device 10, and the information about the extended address indicates a type and/or a format of the extended address of the terminal device 10.

In a possible implementation, the basic address in the message 10 is a multicast address of a local area network, and the control plane function network element allocates the multicast address to the terminal device 20 in the local area network based on the multicast address.

For technical effects brought by the fourth aspect or the possible implementations of the fourth aspect, refer to the descriptions of the technical effects of the first aspect, the second aspect, or the possible implementations of the first aspect or the second aspect. Details are not described herein again.

According to a fifth aspect, a communication apparatus is provided. For example, the communication apparatus is the user plane function network element described above. The communication apparatus has a function of implementing the behavior in the method embodiment of the first aspect. The function may be implemented by hardware, or may be implemented by hardware executing corresponding software. The hardware or the software includes one or more modules corresponding to the foregoing function. In a possible implementation, the communication apparatus includes, for example, a transceiver module, and may further include a processing module coupled to the transceiver module. The transceiver module may include a receiving module and a sending module that are coupled to each other. The modules may perform the corresponding functions in the method example in the first aspect. For details, refer to the detailed descriptions in the method example.

For example, the communication apparatus has a function of implementing the behavior in the embodiment of the first aspect. In a possible implementation, the transceiver module is configured to receive, from an application server, a packet that carries addressing information, where the addressing information includes a basic address associated with a terminal device 10 and an extended address of the terminal device 10, a terminal device 20 is connected to one or more terminal devices, the one or more terminal devices include the terminal device 10, the one or more terminal devices are associated with a same basic address, and the one or more terminal devices have different extended addresses. The processing module is configured to determine the terminal device 20 based on the addressing information. The transceiver module is further configured to send, to the terminal device 20, the packet that carries the extended address.

In a possible implementation, the basic address is a multicast address of a local area network, the local area network includes the terminal device 20 and the one or more terminal devices, and the processing module is specifically configured to:
determine the terminal device 20 based on the addressing information and a first correspondence, where the first correspondence is a correspondence between the basic address associated with the terminal device 10, the extended address of the terminal device 10, and a session of the terminal device 20 accessed by the terminal device 10.

In a possible implementation, the transceiver module is further configured to: receive a message 10 from the application server, broadcast a message 20 in the local area network, and receive the extended address of the terminal device 10 from the terminal device 10 by using the session of the terminal device 20, where the message 10 is used to discover the terminal device 10, the message 10 includes the multicast address and identification information of the terminal device 10, and the message 20 includes the identification information of the terminal device 10.

The processing module is specifically configured to establish the first correspondence based on the session of the terminal device 20 and the extended address of the terminal device 10.

In a possible implementation, the transceiver module is further configured to: receive, from the application server, the packet that carries the multicast address and the extended address of the terminal device 10; if it is determined that there is no forwarding rule that matches the multicast address and the extended address of the terminal device 10, broadcast, in the local area network, the packet that carries the extended address of the terminal device 10; and receive a response 10 from the terminal device 10 by using the session of the terminal device 20.

The processing module is specifically configured to establish the first correspondence based on the session of the terminal device 20.

In a possible implementation, the basic address associated with the terminal device 10 is a unicast address of the terminal device 20, and the processing module is specifically configured to determine the terminal device 20 based on a unicast address of the terminal device 10.

In a possible implementation, the transceiver module is further configured to: receive a message 30 from the application server, broadcast a message 40 in a local area network, receive the extended address of the terminal device 10 from the terminal device 10 by using a session of the terminal device 20, and send the extended address and/or identification information of the terminal device 10 and a basic address of the terminal device 20 to the application server. The message 30 is used to discover the terminal device 10, the message 30 includes a multicast address of the local area network and the identification information of the terminal device 10, the terminal device 20 and the one or more terminal devices are located in the local area network, and the message 40 includes the identification information of the terminal device 10.

In a possible implementation, the basic address includes a MAC address or an IP address.

According to a sixth aspect, a communication apparatus is provided. For example, the communication apparatus is the terminal device 20 described above. The communication apparatus has a function of implementing the behavior in the method embodiment of the second aspect. The function may be implemented by hardware, or may be implemented by hardware executing corresponding software. The hardware or the software includes one or more modules corresponding to the foregoing function. In a possible implementation, the communication apparatus includes, for example, a transceiver module, and may further include a processing module coupled to the transceiver module. The transceiver module may include a receiving module and a sending module that are coupled to each other. The modules may perform the corresponding functions in the method example in the second aspect. For details, refer to the detailed descriptions in the method example.

For example, the communication apparatus has a function of implementing the behavior in the embodiment of the second aspect. In a possible implementation, the transceiver module is configured to: receive, from a user plane function network element, a packet that carries an extended address of a terminal device 10, and send the packet to the terminal device 10, where the communication apparatus is connected to one or more terminal devices, the one or more terminal devices include the terminal device 10, the one or more terminal devices are associated with a same basic address, and the one or more terminal devices have different extended addresses.

In a possible implementation, the processing module is specifically configured to determine a first port of the communication apparatus based on the extended address of the terminal device 10 and a second correspondence, where the second correspondence is a correspondence between an interface of the communication apparatus and the extended address of the terminal device 10.

The transceiver module is specifically configured to send the packet to the terminal device 10 through the first port.

In a possible implementation, the transceiver module is further configured to:
broadcast (or multicast) a message 10, and receive a response 10 from the terminal device 10 through the interface of the communication apparatus, where the message 10 is used to discover the terminal device 10, the message 10 includes identification information of the terminal device 10, and the response 10 includes the extended address of the terminal device 10.

The processing module is specifically configured to establish the second correspondence based on the response 10.

In a possible implementation, the transceiver module is further configured to receive a message 50 from a control plane function network element, where the message 50 includes a multicast address of a local area network, and the communication apparatus and the one or more terminal devices are located in the local area network.

In a possible implementation, the transceiver module is further configured to receive a message 20 from the control plane function network element, where the message 20 includes extended address information of the terminal device 10, and the extended address information indicates a type and/or a format of the extended address of the terminal device 10.

In a possible implementation, the basic address includes a MAC address or an IP address.

According to a seventh aspect, a communication apparatus is provided. For example, the communication apparatus is the application server described above. The communication apparatus has a function of implementing the behavior in the method embodiment of the third aspect. The function may be implemented by hardware, or may be implemented by hardware executing corresponding software. The hardware or the software includes one or more modules corresponding to the foregoing function. In a possible implementation, the communication apparatus includes, for example, a transceiver module. The transceiver module may include a receiving module and a sending module that are coupled to each other, and may further include a processing module coupled to the receiving module and/or the sending module. The modules may perform the corresponding functions in the method example in the third aspect. For details, refer to the detailed descriptions in the method example.

For example, the communication apparatus has a function of implementing the behavior in the embodiment of the third aspect. In a possible implementation, the processing module is configured to generate a packet that carries addressing information, where the addressing information includes a basic address associated with a terminal device 10 and an extended address of the terminal device 10, a terminal device 20 is connected to one or more terminal devices, the one or more terminal devices include the terminal device 10, the one or more terminal devices are associated with a same basic address, and the one or more terminal devices have different extended addresses. The transceiver module is configured to send the packet to a user plane function network element.

In a possible implementation, the transceiver module is further configured to: configure, through a network capability exposure interface, a multicast address of a local area network in which the terminal device 20 is located, where the basic address associated with the terminal device 10 is the multicast address.

In a possible implementation, the transceiver module is further configured to: send a message 10 to the user plane function network element, and receive a message 20 from the user plane function network element, where the message 10 is used to discover the terminal device 10, the message 10 includes the multicast address and identification information of the terminal device 10, and the message 20 includes the extended address or the identification information of the terminal device 10 and a basic address of the terminal device 20 accessed by the terminal device 10.

The processing module is specifically configured to establish a third correspondence between the extended address of the terminal device 10 and/or the identification information of the terminal device 10 and the basic address of the terminal device 20, wherein the terminal device 20 is accessed by the terminal device 10.

In a possible implementation, the basic address associated with the terminal device 10 is a unicast address of the terminal device 20.

In a possible implementation, the basic address includes a MAC address or an IP address.

According to an eighth aspect, a communication apparatus is provided. For example, the communication apparatus is the control plane function network element described above. The communication apparatus has a function of implementing the behavior in the method embodiment of the fourth aspect. The function may be implemented by hardware, or may be implemented by hardware executing corresponding software. The hardware or the software includes one or more modules corresponding to the foregoing function. In a possible implementation, the communication apparatus includes, for example, a transceiver module. The transceiver module may include a receiving module and a sending module that are coupled to each other, and may further include a processing module coupled to the receiving module and/or the sending module. The modules may perform the corresponding functions in the method example in the fourth aspect. For details, refer to the detailed descriptions in the method example.

For example, the communication apparatus has a function of implementing the behavior in the embodiment of the fourth aspect. In a possible implementation, the transceiver module is configured to: receive a message 10 from an application server, and send a message 20 to a terminal device 20 or a user plane function network element, where the message 10 is used to configure information about a basic address associated with a terminal device 10 and information about an extended address associated with the terminal device 10, the terminal device 20 is connected to one or more terminal devices, the one or more terminal devices include the terminal device 10, the one or more terminal devices are associated with a same basic address, and the one or more terminal devices have different extended addresses. The message 20 includes the information about the extended address of the terminal device 10, and the information about the extended address indicates a type and/or a format of the extended address of the terminal device 10.

In a possible implementation, if the basic address in the message 10 is a multicast address of a local area network, the processor is configured to allocate the multicast address to the terminal device 20 in the local area network based on the multicast address.

According to a ninth aspect, a communication apparatus is provided. The communication apparatus may be the user plane function network element in the foregoing method embodiment or a chip disposed in the user plane function network element. The communication apparatus may alternatively be the terminal device 20 in the foregoing method embodiment or a chip disposed in the terminal device 20. The communication apparatus may alternatively be the application server in the foregoing method embodiment or a chip disposed in the application server. The communication apparatus may alternatively be the control plane function network element in the foregoing method embodiment or a chip disposed in the control plane function network element. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the corresponding functional entity in the foregoing method embodiment. For example, when the processor executes the computer program or the instructions, the communication apparatus is enabled to perform the method performed by the user plane function network element in the foregoing method embodiment. For another example, when the processor executes the computer program or the instructions, the communication apparatus is enabled to perform the method performed by the terminal device 20 in the foregoing method embodiment. For example, when the processor executes the computer program or the instructions, the communication apparatus is enabled to perform the method performed by the application server in the foregoing method embodiment. For example, when the processor executes the computer program or the instructions, the communication apparatus is enabled to perform the method performed by the control plane function network element in the foregoing method embodiment.

The communication interface in the communication apparatus in the ninth aspect may be a transceiver in the communication apparatus, for example, implemented by using an antenna, a feeder, a codec, and the like in the communication apparatus. Alternatively, if the communication apparatus is a chip disposed in the communication apparatus, the communication interface may be an input/output interface of the chip, for example, an input/output pin.

For example, the communication apparatus has a function of implementing the behavior in the embodiment of the first aspect. In a possible implementation, the communication interface is configured to receive, from an application server, a packet that carries addressing information, where the addressing information includes a basic address associated with a terminal device 10 and an extended address of the terminal device 10, a terminal device 20 is connected to one or more terminal devices, the one or more terminal devices include the terminal device 10, the one or more terminal devices are associated with a same basic address, and the one or more terminal devices have different extended addresses. The processor is configured to determine the terminal device 20 based on the addressing information. The communication interface is further configured to send, to the terminal device 20, the packet that carries the extended address.

In a possible implementation, the basic address is a multicast address of a local area network, the local area network includes the terminal device 20 and the one or more terminal devices, and the processor is specifically configured to:
determine the terminal device 20 based on the addressing information and a first correspondence, where the first correspondence is a correspondence between the basic address associated with the terminal device 10, the extended address of the terminal device 10, and a session of the terminal device 20 accessed by the terminal device 10.

In a possible implementation, the basic address is a unicast address of the terminal device 10, and the processor is specifically configured to:
determine the terminal device 20 based on the unicast address of the terminal device 10.

For example, the communication apparatus has a function of implementing the behavior in the embodiment of the second aspect. In a possible implementation, the communication interface is configured to: receive, from a user plane function network element, a packet that carries an extended address of a terminal device 10, and send the packet to the terminal device 10, where the communication apparatus is connected to one or more terminal devices, the one or more terminal devices include the terminal device 10, the one or more terminal devices are associated with a same basic address, and the one or more terminal devices have different extended addresses.

In a possible implementation, the processor is specifically configured to determine a first port of the communication apparatus based on the extended address of the terminal device 10 and a second correspondence, where the second correspondence is a correspondence between an interface of the communication apparatus and the extended address of the terminal device 10.

The communication interface is specifically configured to send the packet to the terminal device 10 through the first port.

For example, the communication apparatus has a function of implementing the behavior in the embodiment of the third aspect. In a possible implementation, the processor is configured to generate a packet that carries addressing information, where the addressing information includes a basic address associated with a terminal device 10 and an extended address of the terminal device 10, a terminal device 20 is connected to one or more terminal devices, the one or more terminal devices include the terminal device 10, the one or more terminal devices are associated with a same basic address, and the one or more terminal devices have different extended addresses. The communication interface is configured to send the packet to a user plane function network element.

For example, the communication apparatus has a function of implementing the behavior in the embodiment of the fourth aspect. In a possible implementation, the communication interface is configured to: receive a message 10 from an application server, and send a message 20 to a terminal device 20 or a user plane function network element, where the message 10 is used to configure information about a basic address associated with a terminal device 10 and information about an extended address associated with the terminal device 10, the terminal device 20 is connected to one or more terminal devices, the one or more terminal devices include the terminal device 10, the one or more terminal devices are associated with a same basic address, and the one or more terminal devices have different extended addresses. The message 20 includes the information about the extended address of the terminal device 10, and the information about the extended address indicates a type and/or a format of the extended address of the terminal device 10.

In a possible implementation, if the basic address in the message 10 is a multicast address of a local area network, the processor is configured to allocate the multicast address to the terminal device 20 in the local area network based on the multicast address.

It should be noted that, in a possible implementation, the user plane function network element may be an industrial network edge gateway, the terminal device 10 is an industrial device, the terminal device 20 is a gateway of the industrial device, and the application server is an industrial application server.

According to a tenth aspect, a communication system is provided, where the communication system includes any communication apparatus according to the fifth aspect, any communication apparatus according to the sixth aspect, any communication apparatus according to the seventh aspect, and any communication apparatus according to the eighth aspect. Alternatively, the communication system may further include more communication apparatuses according to the fifth aspect, more communication apparatuses according to the sixth aspect, more communication apparatuses according to the seventh aspect, and more communication apparatuses according to the eighth aspect.

According to an eleventh aspect, this application provides a chip system. The chip system includes a processor, configured to implement functions of the user plane function network element, the terminal device 20, the application server, or the control plane function network element in the method in the foregoing aspects. In a possible design, the chip system further includes a memory, configured to store program instructions and/or data. The chip system may include a chip, or may include a chip and another discrete component.

According to a twelfth aspect, a computer program product is provided. The computer program product includes computer program code. When the computer program code is run, the method performed by the user plane function network element, the terminal device 20, the application server, or the control plane function network element in the foregoing aspects is performed.

According to a thirteenth aspect, this application provides a computer-readable storage medium. The computer-readable storage medium stores a computer program. When the computer program is run, the method performed by the user plane function network element, the terminal device 20, the application server, or the control plane function network element in the foregoing aspects is implemented.

For technical effects brought by the fifth aspect to the thirteenth aspect or the possible implementations of the fifth aspect to the thirteenth aspect, refer to the descriptions of the technical effects of the first aspect to the fourth aspect or the possible implementations of the first aspect to the fourth aspect.

### BRIEF DESCRIPTION OF DRAWINGS

FIG. 1 is an architectural diagram of a communication system according to an embodiment of this application;
FIG. 2 is a schematic architectural diagram of a protocol stack of each device in FIG. 1 in a conventional technology;
FIG. 3 is a schematic architectural diagram of a protocol stack of each device in FIG. 1 according to an embodiment of this application;
FIG. 4 is an architectural diagram of another communication system according to an embodiment of this application;
FIG. 5 is an architectural diagram of a communication system to which an embodiment of this application is applicable;
FIG. 6A and FIG. 6B are a schematic flowchart of a communication method according to an embodiment of this application;
FIG. 7 is another schematic flowchart of a communication method according to an embodiment of this application;
FIG. 8 is a schematic diagram of a structure of a communication apparatus according to an embodiment of this application; and
FIG. 9 is a schematic diagram of another structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Before this application is described, some terms in embodiments of this application are first briefly explained and described, to help a person skilled in the art have a better understanding.
(1) Tunnel: The tunnel includes a 3rd generation partnership project (3rd generation partnership project) network, and may be, for example, a 4th generation (4th generation, 4G) mobile communication network (4G network for short) interface tunnel or a 5th generation (5th generation, 5G) mobile communication network (5G network for short) interface tunnel, or may be a next generation (Next generation, N) network interface 3 (N3 for short) tunnel and an N interface 9 (N9 for short) tunnel. The N3 tunnel is a tunnel between an access device (for example, a base station) and a user plane function entity, and the N9 tunnel is a tunnel between the user plane function entities.
(2) In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects if there is no specific description. The terms "system" and "network" may be used interchangeably in embodiments of this application.

Unless otherwise specified, ordinal numbers such as "first" and "second" in embodiments of this application are used to distinguish between a plurality of objects, and are not intended to limit a sequence, a time sequence, priorities, or importance of the plurality of objects.

The term "connection" mentioned in embodiments of this application may include a physical connection, or may include a wireless connection. If two devices are connected to each other, the two devices may communicate, for example, transmit data to each other. The term "connection" mentioned in embodiments of this application may be a direct connection, or may be an indirect connection. For example, when a source device is connected to a destination device, the source device may be directly connected to the destination device, or the source device may be connected to the destination device via a plurality of intermediate devices.

The technical solutions provided in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, a further evolved system based on LTE or NR, a future wireless communication system, and another similar communication system.

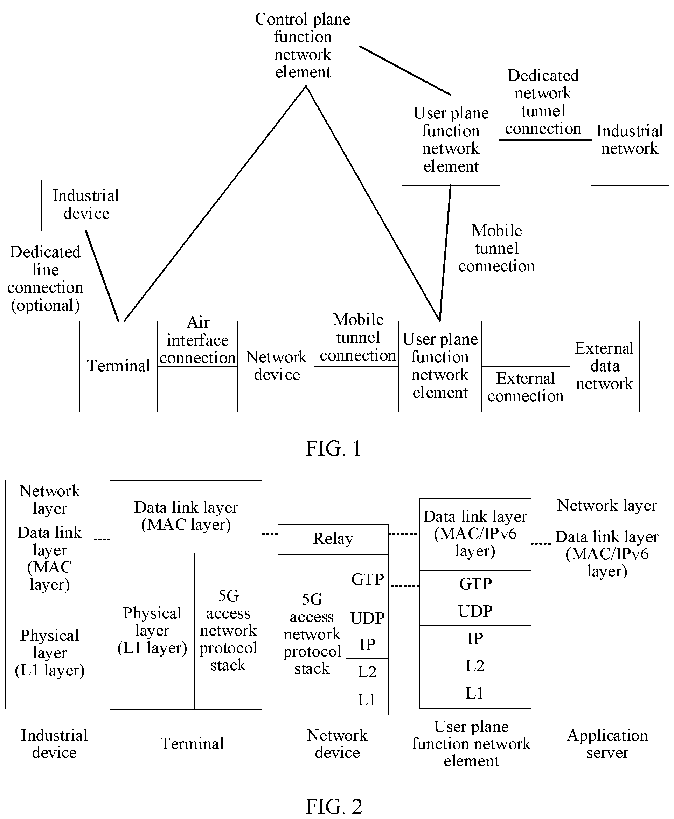

FIG. 1 is a schematic architectural diagram of a network of a communication system to which an embodiment of this application is applicable. The communication system may include three parts: an operator network, a terminal device, and a data network. The following briefly describes functions of some of network elements.

The operator network provides a network service for the terminal device. The operator network may be a 5G network, a 4G network, or the like, or may be a next generation mobile communication network. The operator network includes a (radio) access network ((radio) access network, (R)AN) and a core network. For ease of description, an example in which the (R)AN is referred to as a RAN is used below for description.

The RAN is a subnet of the operator network, and is an implementation system between a service node in the operator network and the terminal device. To access the operator network, the terminal device first passes through the RAN, and may be connected to the service node in the operator network through the RAN. A RAN device in embodiments of this application is also referred to as a network device, and is a device that provides a wireless communication function for the terminal device. The network device includes, for example, but is not limited to, a next generation NodeB (generation NodeB, gNB) in 5G, an evolved NodeB (evolved NodeB, eNB), a baseband unit (baseband unit, BBU), a transmission reception point (transmission reception point, TRP), a transmission point (transmission point, TP), a base station in a future mobile communication system, or an access point in a Wi-Fi system. Alternatively, the access network device may be a radio controller, a centralized unit (centralized unit, CU), and/or a distribution unit (distributed unit, DU) in a cloud radio access network (cloud radio access network, CRAN) scenario, or the network device may be a relay station, a vehicle-mounted device, a network device in a future evolved PLMN network, or the like.

A core network device includes, for example, a user plane network element and a control plane network element, and may be, for example, a network exposure network element or a session management function (session management function, SMF) network element. It should be noted that FIG. 1 is merely an example, and the core network may further include another device, for example, a protocol data unit (protocol data unit, PDU). Examples are not provided herein one by one.

A user plane function network element is a gateway provided by an operator, and is a gateway for communication between the operator network and the data network. The user plane network element includes functions related to a user plane, for example, data packet routing and transmission, packet detection, service usage reporting, quality of service (quality of service, QoS) processing, lawful interception, uplink packet detection, and downlink packet storage. In 5G, the user plane network element may be a user plane function (user plane function, UPF) network element. In future communication such as 6G, the user plane network element may still be a UPF network element or have another name. This is not limited in this application.

The network exposure network element may be a network exposure function (network exposure function, NEF) network element, and is a control plane network element provided by the operator. The NEF network element securely exposes an external interface of the operator network to a third party. When the SMF network element needs to communicate with a third-party network element, the NEF network element may serve as a relay for communication between the SMF network element and the third-party network element. When serving as the relay, the NEF network element may translate identification information of a subscriber and identification information of the third-party network element.

The terminal device includes a terminal, an industrial device connected to the terminal, and the like. The terminal may establish a connection to the operator network through an interface (for example, N1) provided by the operator network, and use services such as data and/or a voice provided by the operator network. The terminal may further access the data network through the operator network, and use an operator service deployed on the data network and/or a service provided by the third party. The third party may be a service provider other than the operator network and the terminal, and may provide services such as data and/or a voice for the terminal. A specific representation form of the third party may be specifically determined based on an actual application scenario, and is not limited herein. In FIG. 1, an example in which the terminal device includes one industrial device and one terminal is used. In some embodiments, the terminal device may include a plurality of industrial devices and a plurality of terminals, and one terminal may be connected to one or more industrial devices. The industrial device is connected to the terminal, in other words, the industrial device accesses the terminal. The industrial device that accesses the terminal may also be referred to as an industrial terminal device or a terminal device. It may be considered that the terminal and the industrial device that accesses the terminal are two types of terminal devices. For ease of description, terminal devices that access a terminal are collectively referred to as industrial devices in this specification.

The terminal is also referred to as user equipment, a terminal apparatus, or a terminal device, and includes a device that provides a user with voice and/or data connectivity, for example, may include a hand-held device with a wireless connection function, or a processing device connected to a wireless modem. The terminal apparatus may communicate with the core network through the radio access network (radio access network, RAN), and exchange a voice and/or data with the RAN. The terminal apparatus may include user equipment (user equipment, UE), a wireless terminal apparatus, a mobile terminal apparatus, a device-to-device (device-to-device, D2D) terminal apparatus, a V2X terminal apparatus, a machine-to-machine/machine-type communication (machine-to-machine/machine-type communication, M2M/MTC) terminal apparatus, an internet of things (internet of things, IoT) terminal apparatus, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), an aircraft (such as an uncrewed aerial vehicle, a hot air balloon, or a civil aviation passenger aircraft), a user device (user device), or the like. For example, the terminal apparatus may include a mobile phone (or referred to as a "cellular" phone), a computer with a mobile terminal apparatus, or a portable, pocket-sized, handheld, or computer built-in mobile apparatus. For example, the terminal apparatus may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal apparatus may alternatively include a limited device, for example, a device with low power consumption, a device with a limited storage capability, or a device with a limited computing capability. For example, the terminal apparatus includes an information sensing device such as a barcode, radio frequency identification (radio frequency identification, RFID), a sensor, a global positioning system (global positioning system, GPS), a BeiDou positioning system, or a laser scanner.

By way of example but not limitation, in embodiments of this application, a vehicle-mounted apparatus placed or installed on a vehicle may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The data network may also be referred to as a packet data network (packet data network, PDN), and is a network located outside the operator network. For example, the data network includes an external data network and an industrial network shown in FIG. 1. The operator network may access a plurality of data networks and a plurality of services may be deployed on the data network to provide a data service and/or a voice service for the terminal device. For example, the data network is a private network of a smart factory, a sensor installed in a workshop of the smart factory may be a terminal, a control server of the sensor is deployed in the data network N, and the control server may provide a service for the sensor. The sensor may communicate with the control server, to obtain instructions of the control server, transmit collected sensor data to the control server based on the instructions, and the like. For another example, the data network is an internal office network of a company, a mobile phone or a computer of an employee of the company may be a terminal, and the mobile phone or the computer of the employee may access information, data resources, and the like on the internal office network of the company.

It should be understood that, in FIG. 1, the industrial device may be connected to the terminal through a dedicated line. The terminal may be connected to the network device over an air interface. The network device is connected to the user plane function network element through a mobile tunnel. Different user plane function network elements may be connected through a mobile tunnel. The user plane function network element may be connected to the industrial network through a dedicated network tunnel. The user plane function network element may be connected to the external data network through an external network, for example, the Ethernet. Information may be transmitted between the terminal and each network element by using a session. It should be understood that the session provides data connectivity between the terminal and the data network (DN). The session may be, for example, a protocol data unit (protocol data unit, PDU) session, and a type of the PDU may be the internet protocol (internet protocol, IP) between networks, the Ethernet (Ethernet), or an unstructured type. The following uses an example in which the terminal and the user plane function network element transmit information by using the PDU session. However, the terminal and the user plane function network element may alternatively transmit information by using another possible session. This is not limited in embodiments of this application.

It should be understood that the device in the system accesses the data network, and completes data encapsulation, mapping, parsing, or the like according to interface protocols between the device and different network elements. For example, the interface protocol is an existing 4-layer communication protocol or 7-layer communication protocol.

For example, FIG. 2 is a schematic architectural diagram of a protocol stack of each device in the system shown in FIG. 1. The following describes a possible protocol stack of each device interface in FIG. 2.
(1) Protocol stack of an industrial device: The protocol stack may include a physical (physical, PHY) layer (also referred to as an L1CEG L1 layer), a data link layer (also referred to as an L2 layer), and a network layer. The PHY layer may implement creation and the like of a physical link required for data transmission, to ensure data transmission. The data link layer defines a specification for data transmission between devices that are interconnected through communication media. One of related technologies at the data link layer is addressing based on a media access control (media access control, MAC) address or an internet protocol (internet protocol, IP) address. To be specific, interconnected nodes in a data link are identified based on the MAC address or the IP address, so that corresponding nodes are accessed. The network layer may encapsulate to-be-sent data according to a supported communication protocol. Because one of the related technologies at the data link layer is addressing based on the MAC address or the IP address, a MAC layer/an IPv6 layer in FIG. 2 represents the data link layer.
(2) Protocol stack of a terminal: The protocol stack may include a PHY layer and a data link layer. It should be understood that the protocol stack of the terminal may further include a 5G access network protocol stack that is equivalent to the PHY layer, to access a network device and communicate with the network device. Data sent by the terminal to the network device is encapsulated at the data link layer.
(3) Protocol stack of a network device: The protocol stack includes a 5G access network protocol stack, a general packet radio service (general packet radio service, GPRS) tunnelling protocol (GPRS tunnelling protocol, GTP) protocol layer, a user datagram protocol (user datagram protocol, UDP) protocol layer, an internet protocol (internet protocol, IP) protocol layer, an L2 layer, and an L1 layer. In a possible implementation, data transmission may be implemented between the terminal and the network device by using a relay. In this case, the protocol stack of the network device may further include a relay layer.
(4) Protocol stack of a UPF: The protocol stack may include a MAC layer, a GTP protocol layer, a UDP protocol layer, an IP protocol layer, an L2 layer, and an L1 layer.
(5) Protocol stack of an application server: The protocol stack may include a network layer and a MAC layer.

Based on the architectural diagram of the protocol stack shown in FIG. 2, if the industrial device needs to perform addressing across a wide area, each device in the system needs to use a global IP address or MAC address. Therefore, an IP address or a MAC address needs to be allocated to each device in a globally unified manner. However, application for the global IP address or MAC address is uncontrollable. For example, currently, for IP address or MAC address allocation, address space needs to be applied for in the United States, which has a disadvantage of being regulated. In other words, currently, an allocation limitation exists in the application for the global IP address or MAC address, and communication between more devices cannot be supported.

In some possible scenarios, industrial devices may negotiate a proprietary protocol, and implement addressing according to the proprietary protocol. Although this manner is not limited by application for the IP address or the MAC address, addressing according to the proprietary protocol is applicable only to a local system. In other words, system interworking cannot be implemented in a manner of addressing according to the proprietary protocol or a manner of addressing based on the IP address or the MAC address.

In view of this, embodiments of this application provide a communication method. In the method, an allocated address of an industrial device may be extended, and addressing is performed based on an extended address of the industrial device. For example, in the method, a MAC address of the industrial device is extended, and the address of the industrial device includes an allocated MAC address and an address that has been extended (extended address for short). Different industrial devices may share a same MAC address but correspond to different extended addresses. The application server may determine, based on the shared MAC address, industrial devices from which received information comes, and may determine, based on that the extended addresses are used to distinguish between different industrial devices, an industrial device from which the received information comes. It can be learned that, addressing is implemented based on the allocated MAC address and the extended address, so that a same MAC address can be allocated to a plurality of industrial devices, thereby avoiding a problem of limited MAC address allocation. In addition, this method does not need to change a current addressing method, in other words, is compatible with the current addressing method.

It should be noted that, the foregoing uses an example in which addressing is implemented based on the MAC address or the IP address. Embodiments of this application may alternatively be applicable to implementing addressing based on a private address or a private identifier. For ease of description, in this specification, the MAC address, the IP address, and the private address may be collectively referred to as a basic address, and an address extended from the basic address is referred to as an extended address. In other words, an address of one industrial device includes two parts: a basic address and an extended address. In embodiments of this application, the MAC address or the IP address is extended, in other words, an address of a device is extended at a data link layer (L2 layer), so that an excessively long packet header of a packet sent between devices can be avoided.

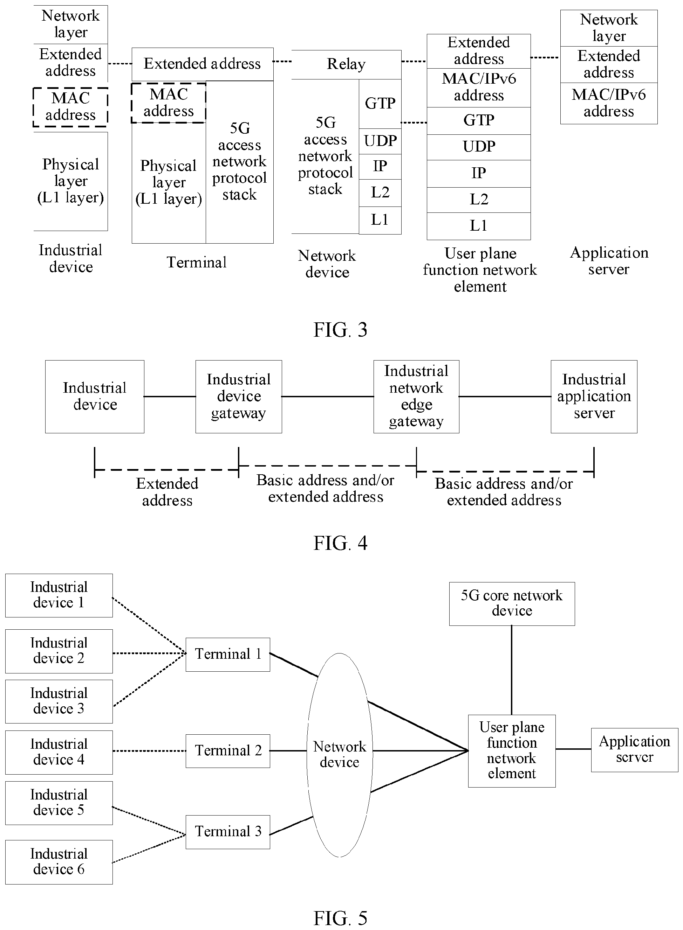

For example, FIG. 3 is a schematic architectural diagram of a protocol stack of each device in the system shown in FIG. 1 according to an embodiment of this application. A difference from FIG. 2 lies in that a data link layer (namely, a MAC layer or a MAC layer/an IPv6 layer) of each device includes two parts: a MAC address/an IPv6 address and an extended address. In FIG. 3, addressing may be performed between an industrial device and a terminal based on the extended address. In this way, a same MAC address and different extended addresses may be configured for a plurality of industrial devices connected to one terminal, thereby avoiding a problem of limited MAC address allocation. For a part in FIG. 3 that is the same as that in FIG. 2, refer to the descriptions in FIG. 2. Details are not described herein again.

It should be understood that, to implement the protocol stack shown in FIG. 3, an extended address function needs to be added to the system in FIG. 1. For example, an extended address definition function is added to a control plane, and an extended address execution function is added to the terminal and a user plane. For example, an extended address definition function module is added to an existing control plane function network element, or a control plane function network element configured to define an extended address is newly added. The control plane function network element sends the defined extended address to the terminal and a user plane function network element. The terminal and the user plane function network element transmit, through a connected network, a packet that carries the extended address. Addressing may be implemented between network elements based on a basic address and/or the extended address.

In some embodiments, the extended address may be defined at the data link layer. For example, the extended address is carried in an extension field of the MAC address; or a header of an IP address is added, and the extended address is carried in the header. The extended address is defined at the data link layer, and may replace a private address for addressing, thereby reducing a packet length. In addition, the MAC address or the IP address can be more compatible with when the extended address is defined at the data link layer. In combination with the extended address, a plurality of heterogeneous addressing manners may be used.

It should be understood that, in an addressing process, the terminal and the user plane function network element adaptively re-encapsulate the packet that carries the extended address, to be specific, perform mapping processing or restoration processing on the basic address and the extended address, to obtain addressing information that matches each industry. For example, addressing information between different network elements may be a private address, an extended address, a MAC address and an extended address, or an IP address and an extended address. In addition, addressing addresses between different network elements may be extended addresses, that is, addressing is performed based on partial addresses of the network elements, hence, common information, for example, a MAC address used as a basic address, may be removed from a packet transmitted between the network elements, thereby reducing a packet length.

The following describes an addressing principle of the technical solution provided in this application by using the protocol stack of each device in the system shown in FIG. 1 as an example.

The following describes the technical solutions provided in embodiments of this application in detail based on the protocol stack shown in FIG. 3.

The communication method provided in embodiments of this application may be applied to the communication architecture shown in FIG. 1, may be further applied to another future-oriented communication technology, or may be applied to a mobile communication system, a fixed communication system, or the like that has another virtual connection or tunnel mechanism.

For example, FIG. 4 is a schematic architectural diagram of a system to which a communication method according to an embodiment of this application is applicable. The system includes an industrial device, an industrial device gateway connected to the industrial device, an industrial network edge gateway connected to the industrial device gateway, and an industrial application server connected to the industrial network edge gateway. The industrial device gateway is similar to the terminal in FIG. 1, and the industrial network edge gateway is similar to the user plane function network element in FIG. 1. One industrial device gateway may be connected to a plurality of industrial devices, and one industrial network edge gateway may be connected to a plurality of supply servers. Each industrial device may send information (for example, control information or data) to the industrial application server via an industrial device gateway connected to the industrial device and an industrial network edge gateway connected to the industrial device gateway. On the contrary, each industrial application server may send information to a corresponding industrial device via an industrial network edge gateway and an industrial device gateway.

The system may configure a basic address and an extended address for the industrial device, where the basic address of the industrial device may be consistent with a basic address of the industrial device gateway, and addressing may be performed between the industrial device and the industrial device gateway based on the extended address. Similarly, the industrial network edge gateway may also be configured with a basic address and an extended address, and the industrial application server may also be configured with a basic address and an extended address. Addressing may be performed between the industrial device gateway and the industrial network edge gateway based on a basic address and/or an extended address, and addressing may be performed between the industrial network edge gateway and the industrial application server based on a basic address and/or an extended address.

It should be noted that the industrial device in this specification may alternatively be a terminal device applicable to another industry. In other words, the industrial device may also be referred to as an industrial terminal device, and one terminal device may be connected to one or more industrial terminal devices. For ease of differentiation, the industrial terminal device is referred to as an industrial device in the following, and a terminal device accessed by the industrial terminal device is referred to as a terminal.

The following describes the addressing method provided in this application in detail with reference to a specific application scenario. It should be understood that a network architecture and a service scenario described in embodiments of this application are used to describe the technical solutions in this application more clearly, and do not constitute a limitation on the technical solutions provided in this application. A person of ordinary skill in the art may learn that, with evolution of the network architecture and emergence of a new service scenario, the technical solutions provided in this application are also applicable to similar technical problems.

FIG. 5 is a schematic architectural diagram of a system to which a communication method according to an embodiment of this application is applied. FIG. 5 uses an industrial network over 5G network as an example. The system includes a 5G core (5G core, 5GC) network device, a network device, a UPF, an application server (application server, AS), at least one terminal, and at least one industrial device connected to each of the at least one terminal. FIG. 5 uses three terminals as an example. The three terminals are respectively a terminal 1, a terminal 2, and a terminal 3. The terminal 1 is connected to an industrial device 1, an industrial device 2, and an industrial device 3, the terminal 2 is connected to an industrial device 4, and the terminal 3 is connected to an industrial device 5 and an industrial device 6. In this embodiment of this application, a control plane function network element may configure a basic address and an extended address for each of one or more industrial devices connected to each terminal. The one or more industrial devices connected to each terminal have a same basic address (for example, MAC address or IP address) and different extended addresses. The industrial device and the terminal may communicate with each other by addressing based on the extended address, the AS and the UPF may communicate with each other by addressing based on the MAC address or an IPv6 address, and the terminal and the UPF may transmit information with each other based on a PDU session established by the terminal, thus realizing communication between the AS and the industrial device. For a plurality of UPFs, if the plurality of UPFs are interconnected, the plurality of UPFs may forward a packet according to the local area network protocol or the general packet radio service (general packet radio service, GPRS) tunnelling protocol (GPRS tunnelling protocol, GTP). It should be understood that a forwarding entry of GTP-C is adaptively extended, to implement addressing based on the extended address.

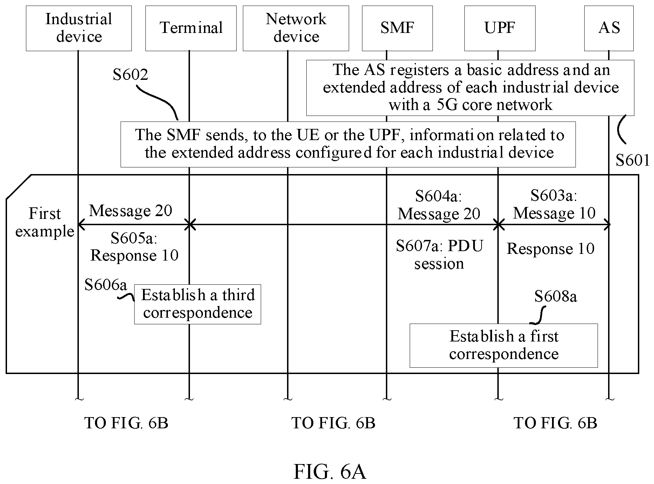

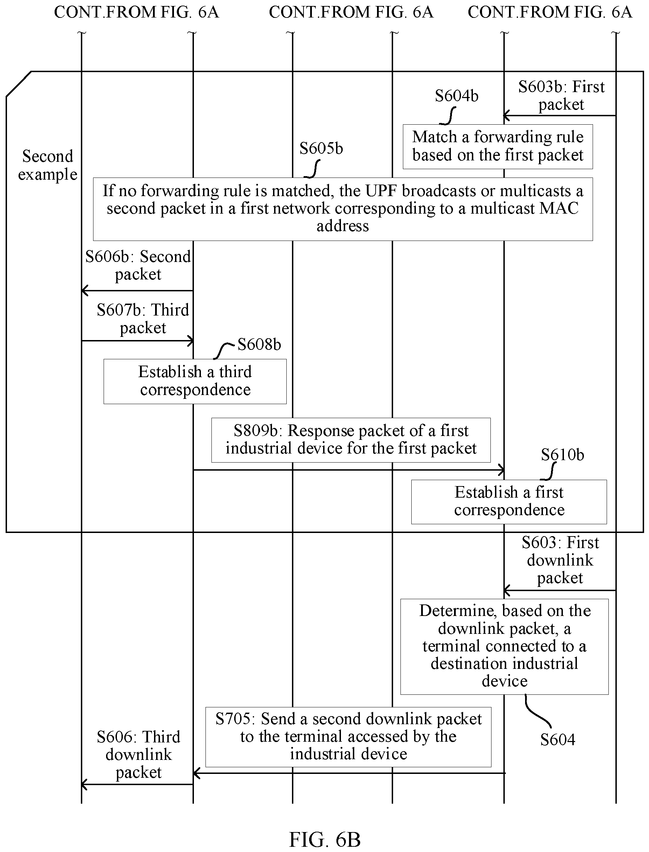

For example, FIG. 6A and FIG. 6B are a schematic flowchart of a communication method according to an embodiment of this application. The method may be applied to the system shown in FIG. 1, FIG. 4, or FIG. 5. The following uses an example in which the method is applied to the system shown in FIG. 5, a terminal is UE, a user plane function network element is a UPF, and a control plane function network element is an SMF. A step procedure performed by the method is described as follows.

S601: An AS registers a basic address and an extended address of each industrial device with a 5G core network.

The basic address may be an address or the like used to identify the device, for example, a MAC address, an IP address, a private address, or an identifier, and the extended address may be considered as an address obtained by extending the basic address. For example, addresses registered for the industrial device may be a MAC address and an extended address, where the extended address may be carried in a reserved field of the MAC address. For another example, addresses registered for the industrial device may be an IP address and an extended address, where the extended address may be encapsulated with the IP address, and used as a header of the IP address. For ease of description, the following uses an example in which the basic address is a MAC address. It should be understood that the MAC address and the IP address in this embodiment of this application may be replaced with each other.

In this embodiment of this application, the MAC address and the extended address of the industrial device are used to uniquely identify the industrial device. If a plurality of industrial devices have a same MAC address and different extended addresses, the plurality of industrial devices may be distinguished based on the extended addresses. For example, for UE, a MAC address configured for a plurality of industrial devices accessing the UE may be a MAC address of the UR, and different extended addresses are configured for the plurality of industrial devices. For example, in FIG. 6A and FIG. 6B, a MAC address 1 may be configured for UE 1, a MAC address 2 may be configured for UE 2, and a MAC address 3 may be configured for UE 3. Correspondingly, a basic address configured for an industrial device 1 to an industrial device 3 is the MAC address 1, a basic address configured for an industrial device 4 is the MAC address 2, and a basic address configured for an industrial device 5 and an industrial device 6 is a MAC address. In this way, the UE and the industrial device may address based on the extended address. For example, the UE 1 and the industrial device 1 to the industrial device 3 may address based on extended addresses of the industrial device 1 to the industrial device 3. Because the industrial device 1 to the industrial device 3 share the MAC address 1, that is, the plurality of industrial devices share one MAC address, and addressing is based on the extended address of each industrial device, so that a limitation on MAC address allocation can be avoided.

In an example, the AS may register the MAC address and the extended address of each industrial device with the 5G core network. For example, the AS may deliver a to-be-registered MAC address to a 5GC device through a network capability exposure interface. The 5GC device may create a local area network for a plurality of industrial devices in an industrial network. It should be understood that the local area network is a 5G local area network. For ease of description, the 5G local area network is referred to as a first network below. In a process of creating the first network, the control plane function network element, for example, the SMF, in the system may allocate the MAC address to the local area network, to be specific, allocate the MAC address to all industrial devices in the first network. The MAC address may also be referred to as a multicast MAC address. It should be understood that the multicast MAC address is a MAC address of UE accessed by all the industrial devices in the first network. In addition, the AS further registers different extended addresses for all the industrial devices in the first network. For example, the AS may configure a format and/or a type of the extended address for each industrial device, and the industrial device determines a configured extended address based on the format and/or the type of the extended address. Specific implementation of the format and the type of the extended address is not limited in this embodiment of this application.

S602: The SMF sends, to the UE or the UPF, information related to the extended address configured for each industrial device.

It should be understood that the AS may register the MAC address and the extended address for each industrial device via a plurality of network elements between the AS and the industrial device. In this case, the MAC address and/or the extended address of each industrial device need/needs to be notified to other network elements in the system, for example, the UE and the UPF. For example, in a PDU session creation process initiated by the UE, the SMF may separately send, to the UE and the UPF by using a non-access stratum (non-access stratum, NAS) message and an N4 message, the information related to the extended address of each industrial device connected to the UE. The UE and the UPF may store the MAC address and/or the extended address of each industrial device, to implement addressing based on the MAC address and/or the extended address.

The MAC address configured for the terminal may be a MAC address of a network adapter of the terminal. When a network of the terminal is faulty, the control plane function network element may update the MAC address of the terminal via the UPF, and map a re-allocated MAC address to an addressing address used by the terminal for external communication. Similarly, an address of the UPF may also be dynamically adjusted, provided that an adjusted address is notified to other network elements in the system, for example, the terminal and the application server. Because the addresses of the terminal and the UPF may be dynamically updated, when device hardware such as a network adapter is faulty, the method in this embodiment of this application is used to facilitate maintenance.

It should be understood that information is transmitted between the network elements in the system based on addressing. For example, a transmission direction of industrial device->UE->UPF->AS is an uplink transmission direction, and a transmission direction of AS->UPF->UE->industrial device is a downlink transmission direction. In an example of downlink transmission, when the AS needs to transmit information to an industrial device, the AS needs to first transmit the information to the UPF, the UPF transmits the information to a terminal connected to the industrial device, and then the terminal transmits the information to the industrial device. However, the UPF may be connected to a plurality of UEs, and each UE may be connected to one or more industrial devices. This involves how the UPF forwards the information to a correct UE and how the UE forwards the information to a correct industrial device.

Therefore, the UPF may establish a correspondence between an extended address of an industrial device and a PDU session of UE, and then forward, based on an extended address of an industrial device, the information to UE corresponding to the industrial device. Alternatively, the AS may establish a correspondence between an extended address of an industrial device and a MAC address of UE, and the AS sends, to the UPF based on the correspondence, a MAC address of UE that corresponds to an extended address of an industrial device. The UPF forwards the information to the corresponding UE based on the MAC address of the UE, and then the UE forwards the information to the corresponding industrial device based on the extended address of the industrial device. It should be understood that one UE may be connected to a plurality of industrial devices, and the UE may establish a correspondence between a plurality of interfaces of the UE and the plurality of connected industrial devices, to select a correct interface based on the correspondence, and forward the information to the corresponding industrial device.

For ease of description, in this specification, the correspondence that is established by the UPF and that is between an extended address of an industrial device and a PDU session of UE is referred to as a first correspondence, the correspondence that is established by the AS and that is between an extended address of an industrial device and a MAC address of a terminal is referred to as a second correspondence, and the correspondence that is established by the UE and that is between a plurality of interfaces and the plurality of connected industrial devices is referred to as a third correspondence.

The first correspondence, the second correspondence, and the third correspondence may alternatively be understood as rules according to which each network element processes an addressing address. For example, for downlink transmission, the UPF needs to map an addressing address carried in a packet from the AS, to correctly find an industrial device to be accessed by the AS. For uplink transmission, the UPF needs to restore an addressing address from an industrial device to an address that can be identified by the AS. In this embodiment of this application, the first correspondence, the second correspondence, and the third correspondence may be dynamically established or updated. In other words, an access path from a source device to a destination device in the network may be dynamically changed, so that security can be improved.

The following separately describes how to establish the first correspondence, the second correspondence, and the third correspondence.

In an example (a first example) of establishing the first correspondence, the UPF may learn and record, in a process in which the AS configures an industrial device, an association relationship between an extended address of the industrial device and a PDU session of UE accessed by the industrial device, to establish the first correspondence.

For example, still refer to FIG. 6A and FIG. 6B. That the UPF establishes the first correspondence may include the following steps.

S603a: The AS sends a message 10 to the UPF, and correspondingly, the UPF receives the message 10, where the message 10 is used to discover at least one industrial device.

The message 10 may be for requesting to discover the at least one industrial device, or it may be considered that the message 10 is for requesting to obtain an addressing address of the at least one industrial device. It should be understood that the addressing address includes at least an extended address. It should be noted that a name of the message 10 is not limited in this embodiment of this application, and the message 10 may alternatively have another name, provided that the message is used to discover the at least one industrial device. For example, the message 10 may be referred to as a device discovery request message.

It should be understood that the AS knows only information such as a name of the industrial device, but does not know the extended address of the industrial device. If the AS wants to know the extended address of the industrial device, the AS may indicate the industrial device to report the extended address. For example, the AS may request the extended address of the industrial device via the UPF and the UE. For example, the AS needs to configure an extended address for at least one industrial device in the first network. The AS may send the message 10 to the UPF, or the AS may broadcast or multicast the message 10.

For example, the message 10 may carry identification information of the at least one industrial device. The identification information may indicate identification (identification, ID) information of the industrial device, for example, may be name information or number information of the industrial device, provided that the information can be used to identify the industrial device. The UPF communicates with the at least one industrial device via the UE, to be specific, the UPF forwards, to the at least one industrial device via the UE, content carried in the message 10. Therefore, the message 10 further includes a MAC address of UE accessed by the at least one industrial device. The MAC address of the UE may be a multicast MAC address of the first network.

It should be noted that a specific implementation form of the message 10 is not limited in this embodiment of this application. In a possible implementation, the message 10 may be encapsulated according to the Profinet digital communication protocol (digital communication protocol, DCP). In other words, the message 10 may be an information frame. In this case, a destination address of the information frame is the multicast address of the first network, and content carried in the information frame includes the identification information of the at least one industrial device.

S604a: The UPF broadcasts a message 20 in the first network, where the message 20 carries the identification information of the at least one industrial device.

After receiving the message 10, the UPF may obtain the multicast address and at least one piece of identification information. Then, the UPF may forward, to the UE, some or all content carried in the message 10, and the UE forwards the content to the at least one industrial device. It should be understood that, to discover an industrial device, the UPF only needs to send identification information of the industrial device to the industrial device. Therefore, the UPF receives the message 10, and may generate the message 20 based on the message 10. For example, the UPF may remove the multicast address from the message 10, to generate the message 20. In other words, the message 20 includes the identification information of the at least one industrial device. Then, the UPF may broadcast the message 20 in the first network. After receiving the message 20, each UE in the first network sends, to each industrial device that accesses the UE, content carried in the message 20.

S605a: The industrial device sends a response 10 to the UE, where the response 10 includes the extended address of the industrial device.

After receiving the message 20, any industrial device may determine whether identification information of the industrial device belongs to the identification information of the at least one industrial device carried in the message 20. If the identification information of the industrial device is the same as one identification information carried in the message 20, the industrial device sends the response 10 to the UE. In other words, the response 10 may be considered as a response message for the message 20, and the response 10 includes an extended address of the industrial device. It should be noted that a specific name of the response 10 is not limited in this embodiment of this application. If the message 10 is referred to as a device discovery request message, the response 10 may be referred to as a device discovery response message.

S606a: The UE establishes a third correspondence.

It should be understood that when sending a packet to the industrial device, the AS needs to forward the packet to the industrial device via the UE. However, one UE may be connected to a plurality of industrial devices. This requires the UE to select a corresponding interface to forward the packet from the AS to a correct industrial device. Therefore, the UE needs to establish the third correspondence.

For example, the extended address of the industrial device may be bound to hardware of the industrial device. The UE may bind the hardware of the industrial device to a UE interface used by the industrial device to access the UE. When receiving the response 10 from an industrial device, the UE may determine an extended address of the industrial device, and may establish a correspondence between the extended address of the industrial device and a port of the UE based on a correspondence between the extended address of the industrial device and the hardware of the industrial device and a correspondence between the hardware of the industrial device and the interface of the UE. By analogy, the UE may establish the third correspondence.

S607a: The UE sends a PDU session to the UPF, where the PDU session carries the response 10 of each industrial device.

It should be understood that, the UE receives a first response message from each industrial device, and may obtain an extended address carried in each response 10. Then, the UE reports the extended address of each industrial device to the UPF. For example, the UE may report the extended address of each industrial device to the UPF by using the established PDU session.

It should be noted that an execution sequence of S606a and S607a is not limited in this embodiment of this application. To be specific, S606a may be performed before S607a, or may be performed after S607a.

S608a: The UPF establishes a first correspondence.

The UPF may establish the first correspondence based on the received PDU session. To be specific, a correspondence between an addressing address of the industrial device and the PDU session is established. It should be understood that the addressing address includes a multicast MAC address and an extended address.

In another example (a second example) of establishing the first correspondence, the UPF learns and records, in a process in which the AS sends a unicast packet to an industrial device, an association relationship between an extended address of the industrial device and a PDU session of UE accessed by the industrial device, to establish the first correspondence. Different from the foregoing example, in this example, the AS requests to discover an industrial device. In other words, a manner in which the AS discovers the industrial device is different from that in the foregoing example.

For example, still refer to FIG. 6A and FIG. 6B. That the UPF establishes the first correspondence may include the following steps.

S603b: The AS sends a first packet to the UPF, and correspondingly, the UPF receives the first packet, where the first packet carries a multicast MAC address and a first extended address.

The multicast MAC address may be considered as a basic address of an industrial device (for example, a first industrial device), and the first extended address is an extended address of the first industrial device. The first packet is used to discover the first industrial device.

S604b: The UPF matches a forwarding rule based on the first packet.

After receiving the first packet, the UPF may use, as a match entry of a forwarding entry, the multicast MAC address and the first extended address that are carried in the first packet, to determine whether there is a forwarding rule (PDR) that matches the first industrial device.

S605b: If no forwarding rule is matched, the UPF broadcasts or multicasts a second packet in a first network corresponding to the multicast MAC address, where the second packet carries the first extended address.

If the UPF does not match a forwarding rule based on the multicast MAC address and the first extended address, the UPF may remove the multicast MAC address from the first packet, to obtain the second packet. Then, the UPF sends the second packet to all UEs in the first network in a multicast manner in the first network, to send the second packet to the first industrial device.

S606b: The UE broadcasts or multicasts the second packet, to send the second packet to an industrial device that accesses the UE.

S607b: The industrial device sends a response packet for the second packet to the AS by using a PDU session of the UE, where the response packet carries the first extended address.

The industrial device receives the second packet, and if it is determined that the first extended address is the same as an extended address of the industrial device, the industrial device sends the response packet for the second packet to the UE.

S608b: The UE establishes a third correspondence based on the response packet for the second packet.

The UE receives the response packet, and may establish the third correspondence. For example, the extended address of the first industrial device may be bound to hardware of the first industrial device. The UE may bind the hardware of the first industrial device to a UE interface used by the first industrial device to access the UE. When receiving the response packet from the first industrial device, the UE may determine to establish a correspondence between the first extended address and a port of the UE based on a correspondence between the first extended address and the hardware of the first industrial device and a correspondence between the hardware of the first industrial device and the interface of the UE. By analogy, the UE may establish the third correspondence.

S609b: The UE sends a response packet of the first industrial device for the first packet to the UPF.

After receiving the response packet, the UE may further send the response packet (for example, referred to as a third packet) of the first industrial device for the first packet to the UPF by using the PDU session of the UE. It should be understood that the third packet carries the first extended address.

S610b: The UPF establishes a first correspondence.

After receiving the third packet, the UPF may establish the first correspondence by using the received PDU session. To be specific, a correspondence between the multicast MAC address of the first industrial device, the first extended address of the first industrial device and the PDU session is established.

S603: The AS sends a first downlink packet to the UPF, and correspondingly, the UPF receives the first downlink packet, where the first downlink packet carries addressing information of a destination industrial device.

When needing to send data to the destination industrial device, the AS may forward the data to the destination industrial device via the UPF. For example, the AS may send the first downlink packet to the UPF, where the first downlink packet may include the addressing information of the destination industrial device, to indicate the UPF to send the data to the destination industrial device. In an example, the addressing information may indicate a MAC address and an extended address of the destination industrial device.

S604: The UPF determines, based on the first downlink packet, UE accessed by the destination industrial device.

The UPF receives the first downlink packet from the AS, and may determine, based on the addressing information carried in the first downlink packet, the UE accessed by the destination industrial device, to forward the data from the AS to the destination industrial device via the UE.

Specifically, based on the first correspondence, the UPF uses, as match entries, the MAC address and the extended address that are indicated by the addressing information, to determine a forwarding rule corresponding to the PDU session of the UE, and further determine the UE accessed by the destination industrial device.

S605: The UPF sends a second downlink packet to the UE accessed by the destination industrial device.

After receiving the first downlink packet, the UPF may remove the MAC address carried in the first downlink packet, to generate the second downlink packet. In other words, the second downlink packet includes the extended address of the destination industrial device. Then, the UPF forwards, by using the determined forwarding rule, namely, the PDU session of the UE, the second downlink packet to the UE accessed by the destination industrial device.

S606: The UE sends a third downlink packet to the destination industrial device.

The UE receives the second downlink packet, and may determine, based on the extended address carried in the second downlink packet and the third correspondence, a port connected to the destination industrial device. Then, the UE sends the data from the AS to the destination industrial device through the port.

For example, the UE may forward the third downlink packet to the destination industrial device through the determined port. It should be understood that the third downlink packet carries data that the AS needs to send to the destination industrial device. If the UE is connected to the destination industrial device through an Ethernet network, the UE may respectively use the multicast MAC address and a MAC address of the UE as a destination MAC address and a source MAC address, and encapsulate the addresses into the second downlink packet, to generate the third downlink packet. Then, the UE sends the third downlink packet to the destination industrial device through the determined port.

It should be understood that, for the UE and the industrial device, addressing may be performed between the UE and the industrial device based on the extended address of the industrial device. However, there may be an indirect connection between the industrial device and the UE. For example, the UE is indirectly connected to the industrial device via a switch or through an Ethernet network. When the industrial device is indirectly connected to the UE, addressing may be performed between the UE and the industrial device based on the MAC address and the extended address of the industrial device. For example, the MAC address of the UE may be a hardware address of a network adapter of the UE, and the MAC address of the industrial device may be a multicast MAC address (namely, a MAC address shared by a plurality of industrial devices). The multicast MAC address may be used for addressing between the UE and the industrial device. When determining the destination industrial device, the UE may send the packet to the destination industrial device based on the port corresponding to the destination industrial device.

In FIG. 6A and FIG. 6B, an example in which the UPF selects UE and forwards the data from the AS to the destination industrial device is used. In this embodiment, a plurality of industrial devices that access same UE share a MAC address of the UE as a basic address. The AS accesses the destination industrial device, and matches, via the UPF, the PDU session of the UE that matches the destination industrial device. In other words, the AS does not need to perceive an association between the UE and the industrial device, that is, does not need to determine an association relationship between the extended address of the industrial device and the MAC address of the UE, thereby simplifying complexity.

In an alternative implementation, if the AS needs to send data to the destination industrial device, the AS may select UE accessed by the destination industrial device, and indicate the UPF to forward the data to the destination industrial device via the UE. In this manner, the UPF may conveniently select the PDU session of the UE based on the indication of the AS, and forward the data from the AS to the destination industrial device by using the PDU session. The UPF does not need to perceive an association relationship between the extended address of the industrial device and the UE, and naturally does not need to perceive interaction messages for establishing the association relationship. In this way, security of an industrial network is improved.

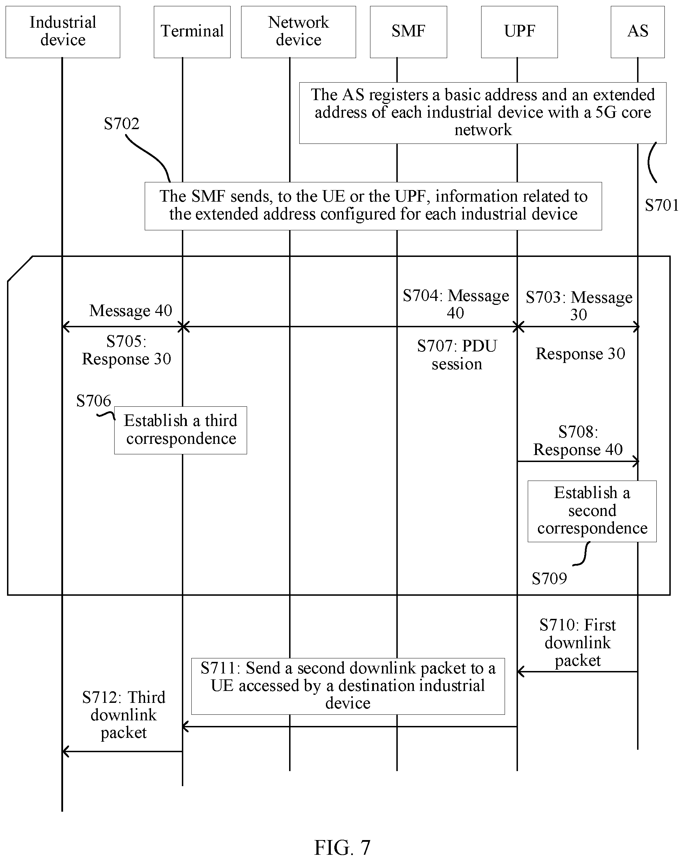

FIG. 7 is a schematic flowchart of another addressing method according to an embodiment of this application. The method is applicable to the system shown in FIG. 1, FIG. 4, or FIG. 5. The following uses an example in which the method is applied to the system shown in FIG. 5, a terminal is UE, a user plane function network element is a UPF, and a control plane function network element is an SMF. A step procedure performed by the method is described as follows.

S701: An AS registers a basic address and an extended address of each industrial device with a 5G core network.

A specific implementation of S701 is the same as the specific implementation of S601. For details, refer to the related descriptions of S601, and details are not described herein again.

S702: The SMF sends, to the UE or the UPF, information related to the extended address configured for the each industrial device.

A specific implementation of S702 is the same as the specific implementation of S602. For details, refer to the related descriptions of S602, and details are not described herein again.

S703: The AS sends a message 30 to the UPF.

A specific implementation of S703 is similar to that of S603, and a difference lies in that the message 30 in S703 includes a multicast MAC address of a first network and identification information of an industrial device. In other words, the AS unicasts a packet to the industrial device.

S704: The UPF broadcasts or multicasts a message 40 in the first network.

A specific implementation of S704 is similar to the specific implementation of S604a. For details, refer to the related descriptions of S604a, and details are not described herein again.

S705: The industrial device sends a response 30 to the UE.

A specific implementation of S705 is similar to the specific implementation of S605a. For details, refer to the related descriptions of S605a, and details are not described herein again. A difference lies in that the response 30 is a response message for the message 40.

S706: The UE establishes a third correspondence.

A specific implementation of S706 is the same as the specific implementation of S606a. For details, refer to the related descriptions of S606a, and details are not described herein again.

S707: The UE sends a PDU session to the UPF, where the PDU session carries a response 20 of each industrial device.

A specific implementation of S707 is the same as the specific implementation of S607a. For details, refer to the related descriptions of S607a, and details are not described herein again.

S708: The UPF sends the response 30 to the AS, where the response 30 carries a MAC address of the UE and the extended address and/or identification information of each industrial device.

The UPF receives the response 20 from the PDU session of the UE, and may obtain a MAC address of the UE that corresponds to the PDU session of the UE. The UPF encapsulates the MAC address into an outer layer of the response 20, to generate the response 30. Then, the UPF sends the response 30 to the AS, so that the AS establishes a second correspondence.

S709: The AS establishes the second correspondence based on the response 30.

After receiving the response 30, the AS may establish a correspondence between the identification information of the industrial device or the extended address of the industrial device and the MAC address of the UE, to send data to a destination industrial device based on the second correspondence.

S710: The AS sends a first downlink packet to the UPF, and correspondingly, the UPF receives the first downlink packet, where the first downlink packet carries a MAC address of UE accessed by the destination industrial device.

The AS stores the second correspondence. When the AS needs to send data to the destination industrial device, the AS may determine, based on the second correspondence, the MAC address of the UE accessed by the destination industrial device. The AS may indicate the UPF to forward the data from the AS to the destination industrial device via the UE corresponding to the MAC address. For ease of description, the UE accessed by the destination industrial device may be referred to as a destination UE. For example, the AS may send the first downlink packet to the UPF, where the first downlink packet carries the MAC address of the destination UE, to indicate the UPF to select the destination UE. It should be understood that the first downlink packet further includes data to be sent by the AS to the destination industrial device.

S711: The UPF sends a second downlink packet to the destination UE.

After receiving the first downlink packet, the UPF may remove the MAC address of the destination UE carried in the first downlink packet, to generate the second downlink packet. The UPF sends the second downlink packet to the destination UE by using a PDU session that is of the UE and that matches the MAC address of the destination UE.

S712: The destination UE sends a third downlink packet to the destination industrial device.

A specific implementation of S712 is the same as the specific implementation of S606. For details, refer to the related descriptions of S606, and details are not described herein again.

It should be understood that, different from that the communication method provided in this application is applied to the system shown in FIG. 5, if the communication method provided in this application is applied to the system shown in FIG. 4, information is transmitted between the industrial network edge gateway and the industrial device network element according to an Ethernet communication protocol or another possible communication protocol.

In this application, an allocated address, for example, a MAC address or an IP address, of a device is extended, and addressing is performed based on an extended address, so that MAC address or IP address allocation is not limited.

In the foregoing embodiments provided in this application, the method provided in embodiments of this application is described from a perspective of interaction between the industrial device, the terminal, the UPF, and the application server. To implement the functions in the method provided in embodiments of this application, the industrial device, the terminal, the UPF, and the application server each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

With reference to the accompanying drawings, the following describes apparatuses configured to implement the foregoing method in embodiments of this application. Therefore, all the foregoing content may be used in the following embodiments. Repeated content is not described again.

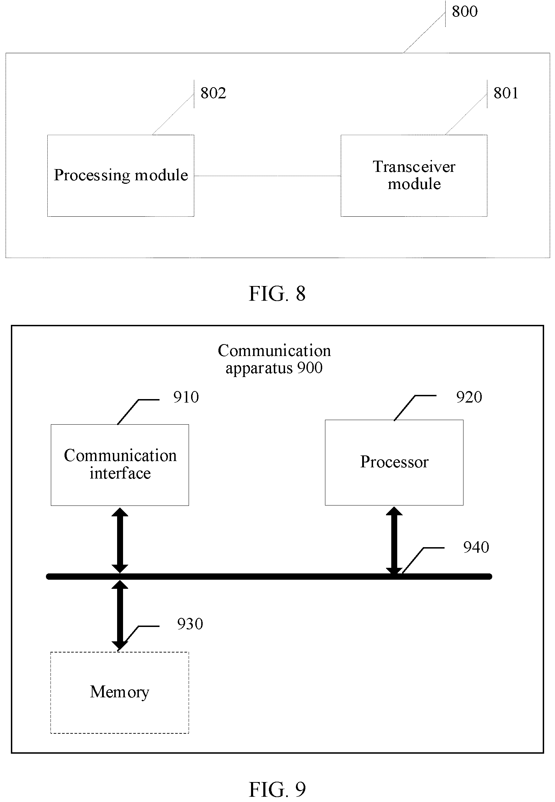

FIG. 8 is a possible example block diagram of a communication apparatus according to this application. The communication apparatus 800 may correspondingly implement functions or steps implemented by the industrial device, the terminal, the UPF, or the application server in the foregoing method embodiments. The communication apparatus may include a transceiver module 801 and a processing module 802. Optionally, the apparatus may further include a storage module. The storage module may be configured to store instructions (code or programs) and/or data. The transceiver module 801 and the processing module 802 may be coupled to the storage module. For example, the processing module 802 may read the instructions (code or programs) and/or the data in the storage module, to implement the corresponding method. The foregoing modules may be disposed independently, or may be partially or totally integrated.

It should be understood that the processing module 802 may be a processor or a controller, for example, may be a general-purpose central processing unit (central processing unit, CPU), a general-purpose processor, a digital signal processor (digital signal processor, DSP), an application-specific integrated circuit (application-specific integrated circuits, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 801 is an interface circuit of the apparatus, and is configured to receive a signal from another apparatus. For example, when the apparatus is implemented in a form of a chip, the transceiver module 801 is an interface circuit used by the chip to receive a signal from another chip or apparatus, or is an interface circuit used by the chip to send a signal to another chip or apparatus.

The communication apparatus 800 may be the industrial device, the terminal, the UPF, or the application server in the foregoing embodiments, or may be a chip used for the industrial device, the terminal, the UPF, or the application server. For example, when the communication apparatus 800 is the industrial device, the terminal, the UPF, or the application server, the processing module 802 may be, for example, a processor, and the transceiver module 801 may be, for example, a transceiver. Optionally, the transceiver may include a radio frequency circuit, and the storage unit may be, for example, a memory. For example, when the communication apparatus 800 is the chip used in the industrial device, the terminal, the UPF, or the application server, the processing module 802 may be, for example, a processor, and the transceiver module 801 may be, for example, an input/output interface, a pin, or a circuit. The processing module 802 may execute computer-executable instructions stored in the storage unit. Optionally, the storage unit is a storage unit in the chip, for example, a register or a buffer. Alternatively, the storage unit may be a storage unit that is in the network device, the terminal, or the positioning management device and that is located outside the chip, for example, a read-only memory (read-only memory, ROM), another type of static storage device that can store static information and instructions, or a random access memory (random access memory, RAM).

In some possible implementations, the communication apparatus 800 can correspondingly implement the behavior and functions of the UPF in the foregoing method embodiments. For example, the communication apparatus 800 may be a UPF, or may be a component (for example, a chip or a circuit) used in the UPF. The transceiver module 801 may be configured to support communication between the UPF and another network entity, for example, support communication between the UPF and the application server and/or the terminal shown in FIG. 7 or FIG. 8. The processing module 802 is configured to: control and manage an action of the UPF. For example, the processing module 802 is configured to support the UPF in performing all operations, except receiving and sending, of the UPF in FIG. 6A and FIG. 6B or FIG. 7.

For example, the transceiver module 801 may be configured to perform all receiving or sending operations performed by the UPF in the embodiment shown in FIG. 6A and FIG. 6B, for example, S601, S602, S603a, S604a, or S603 in the embodiment shown in FIG. 6A and FIG. 6B, and/or configured to support another process of the technology described in this specification; for another example, S601, S602, S603b, S605a, or S603 in the embodiment shown in FIG. 7, and/or configured to support another process of the technology described in this specification. The processing module 802 is configured to perform all operations, except receiving and sending operations, performed by the UPF in the embodiment shown in FIG. 6A and FIG. 6B, for example, S604b, S610b, or S604 in the embodiment shown in FIG. 6A and FIG. 6B, and/or configured to support another process of the technology described in this specification.

For example, the transceiver module 801 may be configured to perform all receiving or sending operations performed by the UPF in the embodiment shown in FIG. 7, for example, S701, S702, S703, S704, S708, S710, S711, or S712 in the embodiment shown in FIG. 7, and/or configured to support another process of the technology described in this specification. The processing module 802 is configured to perform all operations, except receiving and sending operations, performed by the UPF in the embodiment shown in FIG. 7, and/or configured to support another process of the technology described in this specification.

In some embodiments, the transceiver module 801 is configured to receive, from an application server, a packet that carries addressing information, where the addressing information includes a basic address associated with a terminal device 10 and an extended address of the terminal device 10, a terminal device 20 is connected to one or more terminal devices, the one or more terminal devices include the terminal device 10, the one or more terminal devices are associated with a same basic address, and the one or more terminal devices have different extended addresses. The processing module 802 is configured to determine the terminal device 20 based on the addressing information. The transceiver module 801 is further configured to send, to the terminal device 20, the packet that carries the extended address.

In a possible implementation, the basic address is a multicast address of a local area network, the local area network includes the terminal device 20 and the one or more terminal devices, and the processing module 802 is specifically configured to:
determine the terminal device 20 based on the addressing information and a first correspondence, where the first correspondence is a correspondence between the basic address associated with the terminal device 10, the extended address of the terminal device 10, and a session of the terminal device 20 accessed by the terminal device 10.

In a possible implementation, the transceiver module 801 is further configured to: receive a message 10 from the application server, broadcast a message 20 in the local area network, and receive the extended address of the terminal device 10 from the terminal device 10 by using the session of the terminal device 20, where the message 10 is used to discover the terminal device 10, the message 10 includes the multicast address and identification information of the terminal device 10, and the message 20 includes identification information of the at least one terminal device 10.

The processing module 802 is specifically configured to establish a first correspondence based on the session of the terminal device 20 and the extended address of the terminal device 10.

In a possible implementation, the transceiver module 801 is further configured to: receive, from the application server, the packet that carries the multicast address and the extended address of the terminal device 10; if it is determined that there is no forwarding rule that matches the multicast address and the extended address of the terminal device 10, broadcast, in the local area network, the packet that carries the extended address of the terminal device 10; and receive a response 10 from the terminal device 10 by using the session of the terminal device 20.

The processing module 802 is specifically configured to establish the first correspondence based on the session of the terminal device 20.

In a possible implementation, the basic address of the terminal device 10 is a unicast address of the terminal device 10, and the processing module is specifically configured to determine the terminal device 20 based on the unicast address of the terminal device 10.

In a possible implementation, the transceiver module 801 is further configured to: receive a message 30 from the application server, broadcast a message 40 in a local area network, receive the extended address of the terminal device 10 from the terminal device 10 by using a session of the terminal device 20, and send the extended address and/or identification information of the terminal device 10 and a basic address of the terminal device 20 to the application server. The message 30 is used to discover the terminal device 10, the message 30 includes a multicast address of the local area network and the identification information of the terminal device 10, the terminal device 20 and the one or more terminal devices are located in the local area network, and the message 40 includes the identification information of the terminal device 10.

In a possible implementation, the basic address includes a MAC address or an IP address.

It should be understood that the processing module 802 in this embodiment of this application may be implemented by a processor or a processor-related circuit component, and the transceiver module 801 may be implemented by a transceiver or a transceiver-related circuit component.

In some possible implementations, the communication apparatus 800 can correspondingly implement the behavior and functions of the terminal device in the foregoing method embodiments. For example, the communication apparatus 800 may be a terminal device, or may be a component (for example, a chip or a circuit) used in the terminal device. The transceiver module 801 may be configured to support communication between the application server and another network entity, for example, support communication between the terminal device and the UPF and the industrial device shown in FIG. 6A and FIG. 6B or FIG. 6A and FIG. 6B. The processing module 802 is configured to: control and manage an action of the terminal device. For example, the processing module 802 is configured to support the application server in performing all operations, except receiving and sending, of the terminal device in FIG. 7 or FIG. 8.

For example, the transceiver module 801 may be configured to perform all receiving or sending operations performed by the terminal device in the embodiment shown in FIG. 6A and FIG. 6B, for example, S602, S605a, or S607a in the embodiment shown in FIG. 6A and FIG. 6B, and/or configured to support another process of the technology described in this specification; for another example, S605b, S606b, S607b, or S608b in the embodiment shown in FIG. 6A and FIG. 6B, and/or configured to support another process of the technology described in this specification. The processing module 802 is configured to perform all operations, except receiving and sending operations, performed by the terminal device in the embodiment shown in FIG. 6A and FIG. 6B, for example, S606a in the embodiment shown in FIG. 6A and FIG. 6B, and/or configured to support another process of the technology described in this specification; for example, S608b in the embodiment shown in FIG. 6A and FIG. 6B, and/or configured to support another process of the technology described in this specification.

For example, the transceiver module 801 may be configured to perform all receiving or sending operations performed by the terminal device in the embodiment shown in FIG. 7, for example, S702, S704, S705, S711, or S712 in the embodiment shown in FIG. 7, and/or configured to support another process of the technology described in this specification. The processing module 802 is configured to perform all operations, except receiving and sending operations, performed by the terminal device in the embodiment shown in FIG. 7, for example, S706 in the embodiment shown in FIG. 7, and/or configured to support another process of the technology described in this specification.

In some embodiments, the transceiver module 801 is configured to: receive, from a user plane function network element, a packet that carries an extended address of a terminal device 10, and send the packet to the terminal device 10, where the communication apparatus is connected to one or more terminal devices, the one or more terminal devices include the terminal device 10, the one or more terminal devices are associated with a same basic address, and the one or more terminal devices have different extended addresses.

In a possible implementation, the processing module 802 is specifically configured to determine a first port of the communication apparatus based on the extended address of the terminal device 10 and a second correspondence, where the second correspondence is a correspondence between an interface of the communication apparatus and the extended address of the terminal device 10.

The transceiver module 801 is specifically configured to send the packet to the terminal device 10 through the first port.

In a possible implementation, the transceiver module 801 is further configured to:
broadcast (or multicast) a message 10, and receive a response 10 from the terminal device 10 through the interface of the communication apparatus, where the message 10 is used to discover the terminal device 10, the message 10 includes identification information of the terminal device 10, and the response 10 includes the extended address of the terminal device 10.

The processing module 802 is specifically configured to establish the second correspondence based on the response 10.

In a possible implementation, the transceiver module 801 is further configured to receive a message 20 from a control plane function network element, where the message 20 includes a multicast address of a local area network, and the communication apparatus and the one or more terminal devices are located in the local area network.

In a possible implementation, the transceiver module 801 is further configured to receive a message 20 from the control plane function network element, where the message 20 includes extended address information of the terminal device 10, and the extended address information indicates a type and/or a format of the extended address of the terminal device 10.

In a possible implementation, the basic address includes a MAC address or an IP address.

It should be understood that the processing module 802 in this embodiment of this application may be implemented by a processor or a processor-related circuit component, and the transceiver module 801 may be implemented by a transceiver or a transceiver-related circuit component.

In some possible implementations, the communication apparatus 800 can correspondingly implement the behavior and functions of the application server in the foregoing method embodiments. For example, the communication apparatus 800 may be an application server, or may be a component (for example, a chip or a circuit) used in the application server. The transceiver module 801 may be configured to support communication between the application server and another network entity, for example, support communication between the application server and the UPF shown in FIG. 6A and FIG. 6B or FIG. 7. The processing module 802 is configured to: control and manage an action of the application server. For example, the processing module 802 is configured to support the application server in performing all operations, except receiving and sending, of the application server in FIG. 6A and FIG. 6B or FIG. 7.

For example, the transceiver module 801 may be configured to perform all receiving or sending operations performed by the application server in the embodiment shown in FIG. 6A and FIG. 6B, for example, S601, S603a, or S603b in the embodiment shown in FIG. 6A and FIG. 6B, and/or configured to support another process of the technology described in this specification. The processing module 802 is configured to perform all operations, except receiving and sending operations, performed by the application server in the embodiment shown in FIG. 6A and FIG. 6B, for example, S603 in the embodiment shown in FIG. 6A and FIG. 6B, and/or configured to support another process of the technology described in this specification.

For example, the transceiver module 801 may be configured to perform all receiving or sending operations performed by the application server in the embodiment shown in FIG. 7, for example, S701, S703, S708, or S710 in the embodiment shown in FIG. 7, and/or configured to support another process of the technology described in this specification. The processing module 802 is configured to perform all operations, except receiving and sending operations, performed by the application server in the embodiment shown in FIG. 7, for example, S708 in the embodiment shown in FIG. 8, and/or configured to support another process of the technology described in this specification.

In some embodiments, the processing module 802 is configured to generate a packet that carries addressing information, where the addressing information includes a basic address associated with a terminal device 10 and an extended address of the terminal device 10, a terminal device 20 is connected to one or more terminal devices, the one or more terminal devices include the terminal device 10, the one or more terminal devices are associated with a same basic address, and the one or more terminal devices have different extended addresses. The transceiver module 801 is configured to send the packet to a user plane function network element.

In a possible implementation, the transceiver module 801 is further configured to configure, through a network capability exposure interface, a multicast address of a local area network in which the terminal device 20 is located, where the basic address associated with the terminal device 10 is the multicast address.

In a possible implementation, the transceiver module 801 is further configured to: send a message 10 to the user plane function network element, and receive a message 20 from the user plane function network element, where the message 10 is used to discover the terminal device 10, the message 10 includes the multicast address and identification information of the terminal device 10, and the message 20 includes the extended address of the terminal device 10 or the identification information of the terminal device 10 and a basic address of the terminal device 20 accessed by the terminal device 10.

The processing module 802 is specifically configured to establish a third correspondence between the extended address of the terminal device 10 and/or the identification information of the terminal device 10 and the basic address of the terminal device 20, wherein the terminal device 20 is accessed by the terminal device 10.

In a possible implementation, the basic address associated with the terminal device 10 is a unicast address of the terminal device 20.

In a possible implementation, the basic address includes a MAC address or an IP address.

In some possible implementations, the communication apparatus 800 can correspondingly implement the behavior and functions of the control plane function network element (for example, the SMF) in the foregoing method embodiments. For example, the communication apparatus 800 may be a control plane function network element, or may be a component (for example, a chip or a circuit) used in the control plane function network element. The transceiver module 801 may be configured to support communication between the application server and another network entity, for example, support communication between the control plane function network element and the UPF shown in FIG. 6A and FIG. 6B or FIG. 7. The processing module 802 is configured to: control and manage an action of the control plane function network element. For example, the processing module 802 is configured to support the application server in performing all operations, except receiving and sending, of the control plane function network element in FIG. 6A and FIG. 6B or FIG. 7.

For example, the transceiver module 801 may be configured to perform all receiving or sending operations performed by the control plane function network element in the embodiment shown in FIG. 6A and FIG. 6B, for example, S601 or S602 in the embodiment shown in FIG. 6A and FIG. 6B, and/or configured to support another process of the technology described in this specification. The processing module 802 is configured to perform all operations, except receiving and sending operations, performed by the control plane function network element in the embodiment shown in FIG. 6A and FIG. 6B, and/or configured to support another process of the technology described in this specification.

For example, the transceiver module 801 may be configured to perform all receiving or sending operations performed by the control plane function network element in the embodiment shown in FIG. 7, for example, S701 or S702 in the embodiment shown in FIG. 6A and FIG. 6B, and/or configured to support another process of the technology described in this specification. The processing module 802 is configured to perform all operations, except receiving and sending operations, performed by the application server in the embodiment shown in FIG. 7, and/or configured to support another process of the technology described in this specification.

In some embodiments, the transceiver module 801 is configured to: receive a message 10 from an application server, and sends a message 20 to a terminal device 20 or a user plane function network element, where the message 10 is used to configure information about a basic address associated with a terminal device 10 and information about an extended address associated with the terminal device 10, the terminal device 20 is connected to one or more terminal devices, the one or more terminal devices include the terminal device 10, the one or more terminal devices are associated with a same basic address, and the one or more terminal devices have different extended addresses. The message 20 includes the information about the extended address of the terminal device 10, and the information about the extended address indicates a type and/or a format of the extended address of the terminal device 10.

In a possible implementation, the basic address in the message 10 is a multicast address of a local area network, and the processor is configured to allocate the multicast address to the terminal device 20 in the local area network based on the multicast address.

It should be understood that the terminal device 10 is the same as the industrial device in FIG. 6A and FIG. 6B or FIG. 7.

FIG. 9 shows a communication apparatus 900 according to an embodiment of this application. The communication apparatus 900 may be a UPF, and can implement the function of the UPF in the method provided in embodiments of this application. Alternatively, the communication apparatus 900 may be a terminal, and can implement the function of the terminal in the method provided in embodiments of this application. Alternatively, the communication apparatus 900 may be an application server, and can implement the function of the application server in the method provided in embodiments of this application. Alternatively, the communication apparatus 900 may be an industrial device, and can implement the function of the industrial device in the method provided in embodiment of this application. Alternatively, the communication apparatus 900 may be an apparatus that can support the application server, the UPF, the terminal, or the industrial device in implementing the corresponding function in the method provided in embodiments of this application. The communication apparatus 900 may be a chip system. In this embodiment of this application, the chip system may include a chip, or may include a chip and another discrete component.

In hardware implementation, the transceiver module 801 may be a transceiver, and the transceiver is integrated into the communication apparatus 900 to form a communication interface 910.

The communication apparatus 900 includes at least one processor 920. The processor 920 may be a CPU, a microprocessor, an ASIC, or one or more integrated circuits configured to control program execution of the solutions in this application, and is configured to implement or support the communication apparatus 900 in implementing the function of the application server, the UPF, the terminal, or the industrial device in the method provided in embodiments of this application. For details, refer to the detailed descriptions in the method example. Details are not described herein again.

The communication apparatus 900 may further include at least one memory 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions and/or the data stored in the memory 930, so that the communication apparatus 900 implements the corresponding method. At least one of the at least one memory may be included in the processor 920.

The communication apparatus 900 may further include the communication interface 910, and is configured to communicate with another device or a communication network, such as a radio access network (radio access network, RAN), a wireless local area network (wireless local area network, WLAN), or a wired access network by using any apparatus such as a transceiver. The communication interface 910 is configured to communicate with another device by using a transmission medium, so that an apparatus in the communication apparatus 900 may communicate with the another device. For example, when the communication apparatus 900 is a UPF, the another device is a terminal or an application server; or when the communication apparatus is a terminal, the another device is an industrial device or a UPF. The processor 920 may send and receive data through the communication interface 910. The communication interface 910 may be specifically a transceiver.

In this embodiment of this application, a specific connection medium between the communication interface 99, the processor 920, and the memory 930 is not limited. In this embodiment of this application, in FIG. 9, the memory 930, the processor 920, and the communication interface 910 are connected through a bus 940, and the bus is represented using a bold line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

The memory 930 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction structure or a data structure and can be accessed by a computer. However, this is not limited herein. The memory may exist independently, and is connected to the processor through the communication line 940. The memory may alternatively be integrated with the processor.

The memory 930 is configured to store computer-executable instructions for executing the solutions in this application, and the processor 920 controls execution of the computer-executable instructions. The processor 920 is configured to execute the computer-executable instructions stored in the memory 930, to implement the service management method provided in the foregoing embodiments of this application.

Optionally, the computer-executable instructions in this embodiment of this application may also be referred to as application program code. This is not specifically limited in this embodiment of this application.

It should be noted that the communication apparatus in the foregoing embodiments may be a terminal, a circuit, a chip used in the terminal, or another combined component, component, or the like that has a function of the terminal. When the communication apparatus is a terminal, the transceiver module may be a transceiver, and may include an antenna, a radio frequency circuit, and the like. The processing module may be a processor, for example, a central processing unit (central processing unit, CPU). When the communication apparatus is a component that has a function of the terminal, the transceiver module may be a radio frequency unit, and the processing module may be a processor. When the communication apparatus is a chip or a chip system, the transceiver module may be an input/output interface of the chip or the chip system, and the processing module may be a processor of the chip or the chip system.

An embodiment of this application further provides a communication system. Specifically, the communication system includes an application server, a UPF, a terminal, or an industrial device, or may further include more application servers, more UPFs, more terminals, or more industrial devices. For example, the communication system includes an application server, a UPF, a terminal, or an industrial device configured to implement related functions in the embodiment in FIG. 6A and FIG. 6B or FIG. 7.

The application server is configured to implement a function of a related application server part in embodiments of this application, for example, configured to implement a function of a related application server part in the embodiment shown in FIG. 6A and FIG. 6B or FIG. 7. The UPF is configured to implement a function of a related UPF part in embodiments of this application, for example, configured to implement a function of a related UPF part in the embodiment shown in FIG. 6A and FIG. 6B or FIG. 7. The terminal is configured to implement a function of a related terminal part in embodiments of this application, for example, configured to implement a function of a related terminal in the embodiment shown in FIG. 6A and FIG. 6B or FIG. 7. The industrial device is configured to implement a function of a related industrial device part in FIG. 6A and FIG. 6B or FIG. 7. For details, refer to the related descriptions in the method embodiment. Details are not described herein again.

An embodiment of this application further provides a computer-readable storage medium, including instructions. When the instructions are run on a computer, the computer is enabled to perform the method performed by the application server, the UPF, the terminal, or the industrial device in FIG. 6A and FIG. 6B or FIG. 7.

An embodiment of this application further provides a computer program product, including instructions. When the instructions are run on a computer, the computer is enabled to perform the method performed by the application server, the UPF, the terminal, or the industrial device in FIG. 6A and FIG. 6B or FIG. 7.

An embodiment of this application provides a chip system. The chip system includes a processor, may further include a memory, and is configured to implement a function of the application server, the UPF, the terminal, or the industrial device in the foregoing method. The chip system may include a chip, or may include a chip and another discrete component.

All or some of the methods in embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a user plane function network element from an application server, a packet that carries addressing information, wherein the addressing information comprises a basic address associated with a terminal device (10) and an extended address of the terminal device (10), a terminal device (20) is connected to one or more terminal devices, the one or more terminal devices comprise the terminal device (10), the one or more terminal devices are associated with a same basic address, and the one or more terminal devices have different extended addresses;
determining, by the user plane function network element, the terminal device (20) based on the addressing information; and
sending, by the user plane function network element to the terminal device (20), the packet that carries the extended address.

2. The method according to claim 1, wherein the basic address is a multicast address of a local area network, the local area network comprises the terminal device (20) and the one or more terminal devices, and the determining, by the user plane function network element, the terminal device (20) based on the addressing information comprises:
determining, by the user plane function network element, the terminal device (20) based on the addressing information and a first correspondence, wherein the first correspondence is a correspondence between the basic address associated with the terminal device (10), the extended address of the terminal device (10), and a session of the terminal device (20) accessed by the terminal device (10).

3. The method according to claim 2, wherein the method further comprises:
receiving, by the user plane function network element, a message (10) from the application server, wherein the message (10) is used to discover the terminal device (10), and the message (10) comprises the multicast address and identification information of the terminal device (10);
broadcasting, by the user plane function network element, a message (20) in the local area network, wherein the message (20) comprises the identification information of the terminal device (10);
receiving, by the user plane function network element, the extended address of the terminal device (10) from the terminal device (10) by using the session of the terminal device (20); and
establishing, by the user plane function network element, the first correspondence based on the session of the terminal device (20) and the extended address of the terminal device (10).

4. The method according to claim 2, wherein the method further comprises:
receiving, by the user plane function network element from the application server, the packet that carries the multicast address and the extended address of the terminal device (10);
if the user plane function network element determines that there is no forwarding rule that matches the multicast address and the extended address of the terminal device (10), broadcasting, by the user plane function network element in the local area network, the packet that carries the extended address of the terminal device (10);
receiving, by the user plane function network element, a response 10 from the terminal device (10) by using the session of the target terminal device (20); and
establishing, by the user plane function network element, the first correspondence based on the session of the terminal device (20).

5. The method according to claim 1, wherein the basic address associated with the terminal device (10) is a unicast address of the terminal device (20), and the determining, by the user plane function network element, the terminal device (20) based on the addressing information comprises:
determining, by the user plane function network element, the terminal device (20) based on the unicast address of the terminal device (20).

6. The method according to claim 5, wherein the method further comprises:
receiving, by the user plane function network element, a message (30) from the application server, wherein the message (30) is used to discover the terminal device (10), the message (30) comprises a multicast address of a local area network and identification information of the terminal device (10), and the terminal device (20) and the one or more terminal devices are located in the local area network;
broadcasting, by the user plane function network element, a message (40) in the local area network, wherein the message (40) comprises the identification information of the terminal device (10);
receiving, by the user plane function network element, the extended address of the terminal device (10) from the terminal device (10) by using a session of the terminal device (20); and
sending, by the user plane function network element, the extended address and/or the identification information of the terminal device (10) and the unicast address of the terminal device (20) to the application server.

7. The method according to any one of claims 1 to 6, wherein the basic address comprises a media access control MAC address or an internet protocol IP address.

8. A communication method, comprising:
receiving, by a terminal device (20) from a user plane function network element, a packet that carries an extended address of a terminal device (10), wherein the terminal device (20) is connected to one or more terminal devices, the one or more terminal devices comprise the terminal device (10), the one or more terminal devices are associated with a same basic address, and the one or more terminal devices have different extended addresses; and
sending, by the terminal device (20), the packet to the terminal device (10).

9. The method according to claim 8, wherein the sending, by the terminal device (20), the packet to the terminal device (10) comprises:
determining, by the terminal device (20), a first port of the terminal device (20) based on the extended address of the terminal device (10) and a second correspondence, wherein the second correspondence is a correspondence between an interface of the terminal device (20) and the extended address of the terminal device (10); and
sending, by the terminal device (20), the packet to the terminal device (10) through the first port.

10. The method according to claim 9, wherein the method further comprises:
broadcasting, by the terminal device (20), a message (10), wherein the message (10) is used to discover the terminal device (10), and the message (10) comprises identification information of the terminal device (10);
receiving, by the terminal device (20), a response (10) from the terminal device (10) through the interface of the terminal device (20), wherein the response (10) comprises the extended address of the terminal device (10); and
establishing, by the terminal device (20), the second correspondence based on the response (10).

11. The method according to claim 10, wherein the method further comprises:
receiving, by the terminal device (20), a message (20) from a control plane function network element, wherein the message (20) comprises a multicast address of a local area network, and the terminal device (20) and the one or more terminal devices are located in the local area network.

12. The method according to any one of claims 8 to 11, wherein the method further comprises:
receiving, by the terminal device (20), a message (50) from the control plane function network element, wherein the message (50) comprises extended address information of the terminal device (10), and the extended address information indicates a type and/or a format of the extended address of the terminal device (10).

13. The method according to any one of claims 8 to 12, wherein the basic address comprises a media access control MAC address or an internet protocol IP address.

14. A communication apparatus, comprising a transceiver module and a processing module, wherein
the transceiver module is configured to receive, from an application server, a packet that carries addressing information, wherein the addressing information comprises a basic address associated with a terminal device (10) and an extended address of the terminal device (10), a terminal device (20) is connected to one or more terminal devices, the one or more terminal devices comprise the terminal device (10), the one or more terminal devices are associated with a same basic address, and the one or more terminal devices have different extended addresses;
the processing module is configured to determine the terminal device (20) based on the addressing information; and
the transceiver module is further configured to send, to the terminal device (20), the packet that carries the extended address.

15. The communication apparatus according to claim 14, wherein the basic address is a multicast address of a local area network, the local area network comprises the terminal device (20) and the one or more terminal devices, and the processing module is specifically configured to:
determine the terminal device (20) based on the addressing information and a first correspondence, wherein the first correspondence is a correspondence between the basic address associated with the terminal device (10), the extended address of the terminal device (10), and a session of the terminal device (20) accessed by the terminal device (10).

16. The communication apparatus according to claim 14, wherein the transceiver module is further configured to:
receive a message (10) from the application server, wherein the message (10) is used to discover the terminal device (10), and the message (10) comprises a multicast address and identification information of the terminal device (10); broadcast a message (20) in a local area network, wherein the message (20) comprises identification information of the at least one terminal device (10); and receive the extended address of the terminal device (10) from the terminal device (10) by using a session established by the terminal device (20); and
the processing module is configured to establish a first correspondence based on the session established by the terminal device (20) and the extended address of the terminal device (10).

17. The communication apparatus according to claim 16, wherein the transceiver module is further configured to:
receive, from the application server, the packet that carries the multicast address and the extended address of the terminal device (10); if it is determined that there is no forwarding rule that matches the multicast address and the extended address of the terminal device (10), broadcast, in the local area network, the packet that carries the extended address of the terminal device (10); and receive a response (10) from the terminal device (10) by using the session established by the target terminal device (20); and
the processing module is configured to establish the first correspondence based on the session of the terminal device (20).

18. The communication apparatus according to claim 14, wherein the basic address associated with the terminal device (10) is a unicast address of the terminal device (20), and the processing module is specifically configured to:
determine the terminal device (20) based on a unicast address of the terminal device (10).

19. The communication apparatus according to claim 18, wherein the transceiver module is further configured to:
receive a message (30) from the application server, wherein the message (30) is used to discover the terminal device (10), the message (30) comprises a multicast address of a local area network and identification information of the terminal device (10), and the terminal device (20) and the one or more terminal devices are located in the local area network;
broadcast a message (40) in the local area network, wherein the message (40) comprises the identification information of the terminal device (10);
receive the extended address of the terminal device (10) from the terminal device (10) by using a session established by the terminal device (20); and
send the extended address of the terminal device (10) and/or the identification information of the terminal device (10) and a basic address of the terminal device (20) to the application server.

20. The communication apparatus according to any one of claims 14 to 19, wherein the basic address comprises a media access control MAC address or an internet protocol IP address.

21. A communication apparatus, comprising a transceiver module and a processing module, wherein
the transceiver module is configured to: receive, from a user plane function network element, a packet that carries an extended address of a terminal device (10), and send the packet to the terminal device (10), wherein the communication apparatus is connected to one or more terminal devices, the one or more terminal devices comprise the terminal device (10), the one or more terminal devices are associated with a same basic address, the one or more terminal devices have different extended addresses, and the packet sent by the transceiver module to the terminal device (10) is generated by the processing module.

22. The communication apparatus according to claim 21, wherein the processing module is specifically configured to determine a first port of the communication apparatus based on the extended address of the terminal device (10) and a second correspondence, wherein the second correspondence is a correspondence between an interface of the communication apparatus and the extended address of the terminal device (10); and
the transceiver module is configured to send the packet to the terminal device (10) through the first port.

23. The communication apparatus according to claim 22, wherein the transceiver module is further configured to:
broadcast a message (10), wherein the message (10) is used to discover the terminal device (10); and receive a response (10) from the terminal device (10) through an interface of the terminal device (10), wherein the message (10) comprises identification information of the terminal device (10), and the response (10) comprises the extended address of the terminal device (10); and
the processing module is further configured to establish the second correspondence based on the response (10).

24. The communication apparatus according to claim 23, wherein the transceiver module is further configured to:
receive a message (20) from a control plane function network element, wherein the message (20) comprises a multicast address of a local area network, and a terminal device (20) and the one or more terminal devices are located in the local area network.

25. The communication apparatus according to any one of claims 21 to 24, wherein the transceiver module is further configured to:
receive a message (50) from the control plane function network element, wherein the message (50) comprises extended address information of the terminal device (10), and the extended address information indicates a type and/or a format of the extended address of the terminal device (10).

26. The communication apparatus according to any one of claims 21 to 25, wherein the basic address comprises a media access control MAC address or an internet protocol IP address.

27. A communication apparatus, wherein the communication apparatus comprises a processor and a memory, the memory is configured to store a computer program, and the processor is configured to execute the computer program stored in the memory, to enable the apparatus to perform the communication method according to any one of claims 1 to 7 or claims 8 to 13.

28. A communication system, wherein the communication system comprises the communication apparatus according to any one of claims 14 to 20 and the communication apparatus according to any one of claims 21 to 26.

29. A computer-readable storage medium, wherein the computer-readable storage medium stores a computer program, and when the computer program is executed by a computer, the computer is enabled to perform the method according to any one of claims 1 to 13.

30. A computer program product, wherein the computer program product stores a computer program, and when the computer program is executed by a computer, the computer is enabled to perform the method according to any one of claims 1 to 13.
